# EUROPEAN PATENT SPECIFICATION

(11) **EP 0 291 452 B1**
(45) Date of publication and mention of the grant of the patent: **01.06.1994**
(21) Application number: 88810256.3
(22) Date of filing: 21.04.1988
(51) Int. Cl.: C08G 77/38, G02B 1/04, C08F 299/08, C08F 230/08

(54) **Terminal polyvinyl functional macromers, polymers thereof and contact lenses made therefrom**
Endständige Vinylgruppen enthaltende Makromere, davon abgeleitete Polymere und Kontaktlinsen
Macromères ayant des groupes vinyliques terminaux, polymères à base de ces macromères et lentilles de contact

(30) Priority: 30.04.1987 US 45020
(43) Date of publication of application: 17.11.1988
(73) Proprietor: CIBA-GEIGY AG, 4002 Basel (CH)
(72) Inventor: Mueller, Karl F., New York New York 10024 (US); Harisiades, Paul, Hastings-on-Hudson New York 10706-3702 (US)

(56) References cited:
- EP-A- 0 018 624
- EP-A- 0 176 481
- DE-A- 3 006 167
- US-A- 4 486 577
- US-A- 4 640 940

## Description

Unsaturated low molecular weight polymers are widely used in the resins industry, for example as UV-curable coatings and paints, or in the fabrication of molded parts. Typical examples of such unsaturated polymers are the di(meth)-acrylates obtained by reaction of a polyether or a polyester dial with, first, 2 equivalents of a diisocyanate, followed by termination with an hydroxyalkyl (meth)-acrylate , as. e.g. described in US patent 3,509,234 and 4,192,827.

Polysiloxane analogs of such divinyl polymers are described in US patent 4,136,250 and 4,486,577. Direct esterification of polymeric diols with acryl or methacryl dichloride can also be used to make these polymeric di(meth)acrylates, which have found wide use in UV-curable coatings and also, with polysiloxanes as main components, in the contact lens area, because of their high oxygen permeability.

An alternate method for making these divinyl polymers is by reaction of the diol or diamine prepolymer with an unsaturated isocyanate, most commonly isocyanatoethylmethacrylate (IEM). This method has the advantage that no chain extensions can occur and no volatile components or water have to be removed. Unsaturated polymers based on this reaction have been described in US patent 4,338,242 and 4,529,765. Unsaturated polysiloxanes made by this method are described in US patent 4,563,539 and 4,605,712.

All these divinyl polymers give on polymerization crosslinked polymers, just like low molecular weight (MW) divinyl compounds; in the coatings industry, high MW divinyl compounds are often used alone, without the addition of highly toxic, volatile comonomers, or they are used in combination with low MW di- or tri- or tetra(meth)acrylates in order to increase crosslinked density. Often such mixtures are incompatible because of differences in solubility parameters and because the relatively high MW divinyl-polymers (MW, typically range from 1000-10000) are poorly miscible with other polymeric components.

When polysiloxane-di or tri(meth)acrylates are used to make gas permeable contact lens materials, additional crosslinking agents, like ethylene glycol dimethacrylate, have often to be added to achieve sufficient rigidity. Even then, the additional hydrogen bonding chain interaction derived from multiple urethane linkages are necessary for making a high modulus polymer.

A high urethane content of the divinyl-polysiloxane prepolymer has also been found to help compatibility with many comonomers especially acrylic monomers, which are commonly used in the fabrication of contact lens materials, and in which high optical clarity is of greatest importance (US patent 4,486,577).

It has now been discovered that polysiloxane prepolymers terminated with at least three vinyl groups give polymers with superior hardness and oxygen permeability.

These polyvinyl-polysiloxanes are superior to the di- or tri-vinyl polysiloxanes of prior art in most applications were product stiffness and compatibility with comonomers is important.

One embodiment of the present invention relates to a poly-unsaturated polysiloxane of the formula I, 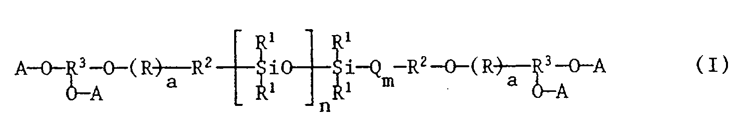
wherein a is zero or one;
n is 2 to 500;
m is zero to 2;
wherein a and m are not both zero at the same time;
at least three of A either consist of a reactive vinyl containing group of the formula Ia or Ib, and the remaining A are hydrogen or said reactive vinyl containing group Ia or Ib, 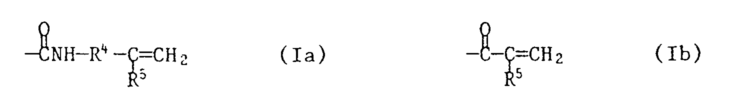
provided that at least one of A is of formula Ia in case that m is zero and a is one;
where R⁴ is arylene of 6 to 12 carbon atoms, alkarylene of 7 to 14 carbon atoms, alkylene of up to 8 carbon atoms, alkyleneoxy of up to 8 carbon atoms or a group of the formula 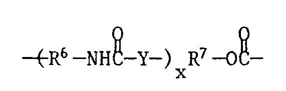
where R⁷ is alkylene of 2 to 8 carbon atoms, x is zero or one, Y is -O- or -NR⁸- where R⁸ is hydrogen or alkyl of up to 4 carbon atoms, and R⁶ is the diradical residue of an aliphatic, cycloaliphatic, aromatic or araliphatic diisocyanate;
and R⁵ is hydrogen or methyl;
R¹ is alkyl of up to 4 carbon atoms or phenyl;
R² is alkylene of 2 to 6 carbon atoms;
R³ is 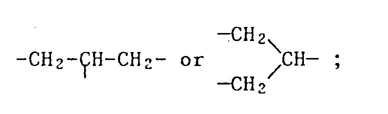
such that -R³(OA)₂ is AOCH₂CH(OA)CH₂- or (AOCH₂)₂CH-;
Q is a group of the formula Ic, 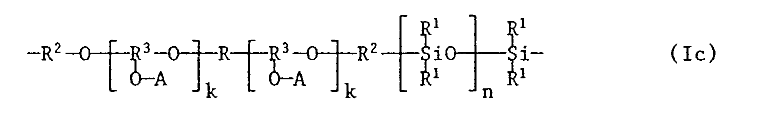
where R¹, R², R³, A and n are as defined above; and k is zero or one;
and R is a group of the formula Id 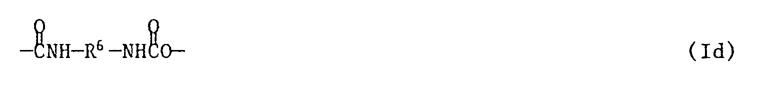
where R⁶ is as defined above.

Arylene of 6 to 12 carbon atoms is preferably phenylene, unsubstituted or substituted by one or more lower alkyl groups, such as e.g. methyl groups, e.g. phenylene or methyl-phenylene.

Alkarylene of 7 to 14 carbon atoms is preferably phenylene lower alkylene, wherein phenyl is unsubstituted or substituted by one or more lower alkyl groups, such as e.g. methyl groups, e.g. phenylene methylene or dimethylphenylene-methylene.

Alkylene of up to 8 carbon atoms is e.g. methylene, 1,2-ethylene, 1,3-proylene, 1,2-propylene, butylene, pentylene, or octylene.

Alkyleneoxy of up to 8 carbon atoms is preferably ethyleneoxy, propyleneoxy or butyleneoxy, the oxygen atom thereof being bound to the carbon atom to which R⁴ is connected.

Lower alkyl preferably has up to 8 carbon atoms, more preferably up to 4 carbon atoms, and is e.g. methyl, ethyl, propyl or tert. butyl.

The diradical residue of an aliphatic, cycloaliphatic, aromatic or araliphatic diisocyanate is defined as a corresponding diisocyanate without its both -NCO groups. Thus an aliphatic diradical residue is e.g. alkylene of up to 8 carbon atoms, such as 1,6-hexylene; an aromatic diradical residue is e.g. phenylene, unsubstituted or substituted by one or more lower alkyl groups, such as methyl, e.g. methylphenylene; a cycloaliphatic diradical residue is e.g. cycloalkylene having 5 or 6 carbon atoms or cycloalkylene lower alkylene having 5 or 6 carbon atoms in the cycloalkylene moiety, both of which unsubstituted or substituted by one or more lower alkyl groups, such as methyl groups, e.g. trimethylcyclohexylene or trimethylcyclohexylene methylene; and an araliphatic diradical residue is e.g. phenylene-lower alkylene or phenylene-lower alkylene-phenylene, e.g. phenylenemethylene or phenylene-methylenephenylene.

R¹ is preferably methyl.

In another alternate preferred embodiment, m is 1 or 2, k is one, a is zero, A is of the formula Ia, x is zero, -R³(OA)₂ is of the formula AOCH₂CH(OA)CH₂- and R⁵ is methyl. Most preferably in this embodiment, R² is ethylene and R⁶ is a divalent hydrocarbyl aliphatic, cycloaliphatic, aromatic or araliphatic group of up to 16 carbon atoms.

In a yet further alternate embodiment, A is of the formula Ib, a is one, m is 1 or 2, k is zero, -R³(OA)₂ is of the formula (AOCH₂)₂CH- and R⁵ is methyl. Most preferably in this embodiment, R² is ethylene and R⁶ is a divalent hydrocarbyl aliphatic, cycloaliphatic, aromatic or araliphatic group of up to 16 carbon atoms.

The poly-unsaturated poylsiloxanes of formula I can be prepared by methods known in the art.

For example, compounds of formula I can be prepared by reacting a polysiloxane polyol of the formula II, 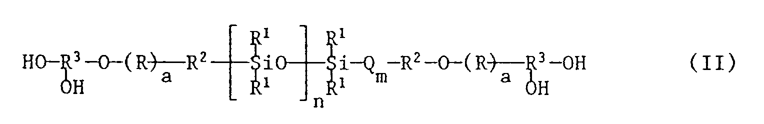
wherein R, R¹, R², R³, a, n and m are as defined above, with an isocyanato substituted vinyl compound of the formula III, 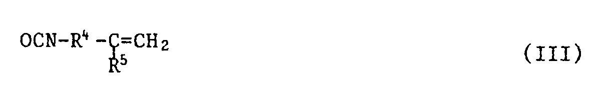
where R⁴ and R⁵ are as defined above, preferably in the presence of a urethane catalyst such as stannous octoate or dibutyltin dilaurate, in the presence or absence of a solvent at a temperature between ambient and 80°C. For the manufacture of compounds of formula I wherein A is of the formula Ib, a compound of formula III is replaced by the respective acrylic or methacrylic acid derivative introducing the group of formula Ib.

The compounds of formula II are known or can be prepared by methods known in the art. For example, the compounds of formula II where a is zero and m is zero are known or can be prepared by reacting the corresponding known siloxane of the formula IV 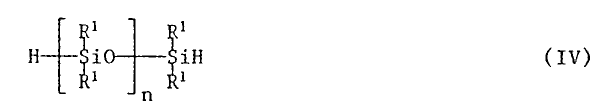
with two equivalents of an alkenyl epoxide of the formula V, 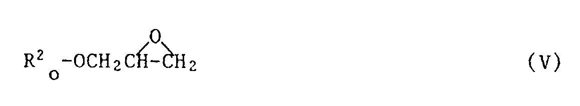
where R²ₒ represents an alkenyl group of 2 to 6 carbon atoms which, upon addition to the siloxane, corresponds to R², to form the corresponding di-epoxide, in the presence of an addition catalyst such as hexachloroplatinic acid at a temperature between about 0°C and 80°C in an inert solvent, and the resulting diepoxide hydrolyzed to the corresponding tetra-ol, of formula II where a is zero and m is zero, by contacting said di-epoxide with methanolic or aqueous base, such as an alkali metal hydroxide, e.g. sodium hydroxide, at a temperature between about 0°C and about 80°C.

Those compounds of formula I wherein a is one and m is zero can be prepared by end-capping the corresponding known diol of the formula VI 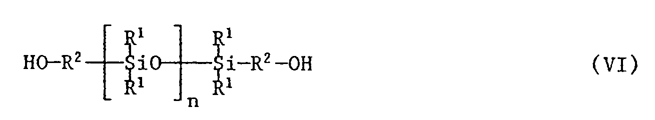
with a di-isocyanate of the formula VII

OCN-R⁶-NCO (VII)

in a mole ratio of two moles of the compound of formula VII per mole of compound of formula VI in the optional presence of a urethane catalyst, such as dibutyltin-dilaurate or a tri-lower alkyl amine, e.g. triethylamine, or pyridine in the presence or absence of an inert diluent, at a temperature between about 0°C to about 80°C, recovering the resulting diisocyanate, and reacting the diisocyanate with an alcohol of the formula VIII 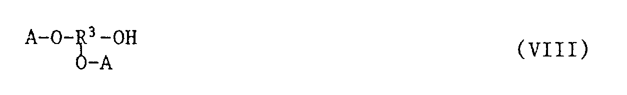
where R³ is as defined above and A is hydrogen, such that the corresponding intermediate of formula II where m is zero and a is 1, is produced, in the ratio of two moles of the compound of formula VIII per mole of said diisocyanate optionally in the presence of a urethane catalyst, such as dibutyltin-dilaurate or a tri-lower alkyl amine, e.g. triethylamine, or pyridine, in the presence or absence of a solvent, at a temperature between about 0°C and about 80°C.

Those compounds wherein m is 1, and k is 1, can be prepared from those compounds of formula II where a and m are zero by reacting two moles of the corresponding compound of formula II where m is zero per mole of isocyanate of formula VII under the conditions recited in the preceding paragraph. Similarly, those compounds where m is 2 and k is 1 can be prepared from those compounds of formula II, wherein a and m are zero by reacting three moles thereof per two moles of diisocyanate of formula VII under the urethane promoting conditions of the preceding paragraph to obtain the corresponding chain extended product of formula II.

Using the same conditions, the diol of formula VI can be chain extended with an di-isocyanate of formula VII in amounts of two moles of diol to three moles of di-isocyanate, or three moles of diol to four moles of di-isocyanate and then the terminal di-isocyanate macromer reacted with the alcohol of formula VIII to obtain the corresponding compound of formula I where m is 1 or 2, k is zero and a is 1.

In the above reactions between isocyanate and alcohol, a solvent may be employed, or the reaction conducted neat. Where a solvent is desirable or necessary, an aprotic solvent, such as methyl ethyl ketone, isopropyl acetate, dimethylsulfoxide or sulfolane may be employed. Also, if the compound of the formula I is to be copolymerized with a liquid monomer, such as methyl methacrylate or dimethylacrylamide, the monomer may advantageously be employed as solvent.

The polysiloxanes of formula I are generally resinous solids, semisolids or viscous liquids varying in number average molecular weight from 400 to 100,000, preferably from 500 to 10,000 depending on the molecular weight of the polysiloxane employed as starting material and the amount of chain extension.

The polyunsaturated polysiloxanes of formula I can be used by themselves as rapidly ultraviolet or heat-curing compositions or they can be copolymerized with one or more conventional monomers to provide useful polymers. Such polymers can be used as coatings, e.g. by polymerizing the monomer of formula I, alone or with up to 95 percent by weight of conventional comonomers, for the protection of metals, fibers, woods, ceramics or the like, or as biocampatable polymers, including contact lenses, or as gas permeable membranes, especially oxygen permeable membranes. Moreover, the polyfunctional monomers of formula I may be used as polymer cross-linking agents in order to increase the structural integrity of such polymers by providing multiple cross-linking sites. Also, polymers of the polyfunctional monomer are useful upon curing as optical fiber coatings, for example as coatings for poly-methacrylate fibers wherein the fiber is passed through a solution of monomer and cured by placement under an ultraviolet lamp. The resulting coated fiber possesses increased transmissibility of light due to the outer coating of polymer.

Preferred compounds of formula III include 2-isocyanatoethyl methacrylate, 2-isocyanatoethyl acrylate, 3-isocyanatopropyl methacrylate, 1-methyl-2-isocyanatoethyl methacrylate, and 1,1-dimethyl-2-isocyanatoethyl acrylate. Most preferred is 2-isocyanatoethyl methacrylate. Such compounds and their preparation are disclosed, for example, in US Patent 2,718,516 and British Patent 1,252,099.

Other useful isocyanates of formula III include isocyanato-alkyl vinyl ethers, such as 2-isocyanatobutyl vinyl ether. Also useful are isocyanates obtained by the reaction of one mole of a hydroxy- or amino alkyl acrylate or methacrylate per mole of di-isocyanate of formula VII under the conditions described above for urethane formation. Examples of useful such hydroxy- or amino alkyl acrylates and methacrylates include 2-hydroxyethyl methacrylate, 2-hydroxyethyl acrylate, 3-hydroxypropyl methacrylate, or t-butylaminoethyl methacrylate and suitable di-isocyanates of formula VII include isophorone diisocyanate, (3,3,4)-trimethylhexane-1,6-diisocyanate, toluene diisocyanate, diphenylmethane-4,4'-diisocyanate and the like.

Yet further preferred compounds of formula III include styrene isocyanate and m-isopropenyl-alpha,alpha-dimethylbenzyl isocyanate.

Diols of formula VI, and the endcapped products thereof with e.g. diisocyanates of formula VII are described for example in US Patents 4,136,250; 4,486,577; and 4,605,712.

A further embodiment of the invention relates to a homopolymer of the compound of formula I as disclosed in claim 1.

A further embodiment of the invention relates to a polymer of the compound of formula I as disclosed in claim 8 with up to 95 percent by weight of one or more hydrophilic or hydrophobic reactive vinyl monomers, or mixtures thereof, based on the weight of polymer. Preferably the unsaturated polysiloxanes of the present invention are used in combination with other vinyl monomers to make crosslinked polysiloxane-polyvinyl-block copolymers.

The great variety of monomeric reactants makes it possible to prepare either hard highly crosslinked copolymers with suitable acrylic, methacrylic or other vinyl monomers, or to prepare soft, rubber like copolymers with low crosslink density.

It is also possible to prepare by copolymerization with hydrophilic monomers polysiloxane-hydrogels with water contents ranging up to 80 %.

Reactive monomers which can be employed together with the unsaturated polysiloxanes include mono- or poly-ethylenically unsaturated monomers which undergo polymerization upon exposure to UV-radiation or chemical initiation.

If the polyunsaturated polysiloxanes are to be used in biocompatible materials, especially in either hard or soft contact lenses, a balance of hydrophilic and hydrophobic properties is required and water-soluble as well as water-insoluble comonomers can be used.

The water-insoluble vinyl monomers useful in the present invention are preferably:

Acrylates and methacrylates of the general structure: 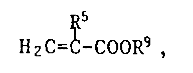
acrylamides and methacrylamides of structure: 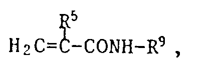
maleates, fumarates and itaconates of structures:
R⁹OOC-CH=CH-COOR⁹ or 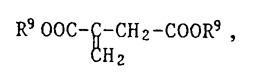
vinyl esters of structure: R⁹-COO-CH=CH₂
and vinyl ethers of structure: H₂C=CH-O-R⁹
wherein R⁵ is hydrogen or methyl and R⁹ is a linear or branched alkyl aliphatic, cycloaliphatic or aromatic group with from 1 to 21 carbon atoms and which may contain ether or thioether linkages or a -CO- group; R⁹ may also be a heterocyclic or a heterocyclic substituted alkyl group containing oxygen, sulfur or nitrogen atoms, or a polypropylene oxide or poly-n-butylene oxide group with from 2 to 50 repeating alkoxy units. In addition, the R⁹ group may contain halogen atoms, especially fluorine in form of perfluorinated alkyl groups with from 1-12 carbon atoms; or it may contain dimethylsiloxane groups with from one to six silicon atoms; and may contain -SO- or -SO₂ groups. In case of maleates, fumarates and itaconates one of both R⁹ groups may be hydrogen.

Included among the useful monomers are: methyl-; ethyl-; propyl-; isopropyl-; butyl-; isobutyl-; tert.-butyl-; ethoxyethyl-, e.g. 2-ethoxyethyl; methoxyethyl-, e.g. 2-methoxyethyl; benzyl-; 4-t-butylphenyl-; cyclohexyl-; trimethylcyclohexyl-; isobornyl-; dicyclopentadienyl-; norbornylmethyl-; cyclododecyl-; 1,1,3,3-tetramethylbutyl-; n-butyl-; n-octyl-; 2-ethylhexyl-; decyl-; dodecyl-; tridecyl-; octadecyl-; glycidyl; ethylthioethyl-; furfuryl-; 2-butoxyethyl, 2-(2-ethoxyethoxy)ethyl-; hexafluoroisopropyl-; 1,1,2,2-tetrahydroperfluorododecyl-; tri-, tetra- or penta-siloxanyl propyl acrylates and methacrylates, as well as the corresponding amides; N-(1,1-dimethyl-3-oxobutyl)acrylamide; mono-and dimethylfumarate, maleate and itaconate; diethyl fumarate; isopropyl and diisopropyl fumarate and itaconate; mono- and diphenyl and methylphenyl fumarate and itaconate; methyl vinyl ether and methoxyethyl vinyl ether; vinyl acetate, vinyl propionate, vinyl benzoate, furthermore, although not covered by the structures hereinbefore, acrylonitrile, styrene, alphamethyl styrene and tert-butylstyrene.

Water soluble monomers which are also useful comonomers in the present invention are e.g. acrylates and methacrylates of the general structure: 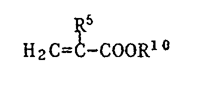
wherein R¹⁰ is a hydrocarbon residue of 1 to 10 carbon atoms substituted by one or more water solubilizing groups such as carboxy, hydroxy or tert.-amino, or a polyethylene oxide group with from 2-100 repeating units, or a group which contains sulfate, phosphate, sulfonate or phosphonate groups, and wherein R⁵ is hydrogen or methyl.

Acrylamides and methacrylamides of structure 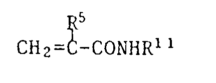
wherein R⁵ is hydrogen or methyl and R¹¹ is hydrogen or an alkyl group with 1-4 carbon atoms, are also useful comonomers.

Maleates and fumarates of structure R¹⁰OOC-CH=CH-COOR¹⁰ and vinyl ethers of structure H₂C=CH-OR¹⁰ wherein R¹⁰ is as defined above are likewise useful as comonomers as are N-vinyl-lactams, like N-vinyl-2-pyrrolidone.

Included among the useful water soluble monomers, although not all of them are covered by the structures hereinbefore, are 2-hydroxyethyl-, 2- and 3-hydroxypropyl-, 2,3-dihydroxypropyl-, polyethoxyethyl-, and polyethoxypropylacrylates and methacrylates as well as the corresponding acrylamides and methacrylamides, sucrose-, mannose-, glucose-, sorbitolacrylates and methacrylates; and di-(-2-hydroxyethyl)maleate; acrylamide and methacrylamide, N-methylacrylamide and methacrylamide, bisacetoneacrylamide, 2-hydroxyethylacrylamide, dimethyl-acrylamide and methacrylamide, methylolacrylamide and methacrylamide; vinylformamide and vinylacetamide, N,N-dimethyl- and N,N-diethyl-aminoethyl acrylate and methacrylate as well as the corresponding acrylamides and methacrylamides, N-tert.butylaminoethyl methacrylate and methacrylamide, 2- and 4-vinylpyridine, 4- and 2-methyl-5-vinylpyridine, N-methyl-4-vinyl piperidine, 1-vinyl- and 2-methyl-1-vinylimidazole, para- and orthoaminostyrene, dimethylaminoethyl vinyl ether, N-vinylpyrrolidone, and 2-pyrrolidinoethyl methacrylate; acrylic and methacrylic acid, itaconic-, cinnamic-, crotonic-, fumaric-, and maleic acids and lower hydroxyalkyl mono- and diesters thereof, such as 2-hydroxyethyl- and di(2-hydroxyethyl) fumarate, -maleate and -itaconate, and 3-hydroxypropyl-butyl fumarate, and di(polyalkoxy)alkyl-fumarates, maleates and itaconates; maleic-anhydride, sodium acrylate and methacrylate, 2-methacryloyloxyethylsulfonic acid, 2-acrylamido-2-methyl-propanesulfonic acid, 2-phosphatoethyl methacrylate, vinylsulfonic acid, sodium vinylsulfonate, p-styrenesulfonic acid, sodium p-styrenesulfonate, and allyl sulfonic acid.

Also included are the quaternized derivatives of cationic monomers obtained by quaternization with selected alkylating agents like halogenated hydrocarbons such as methyl iodide, benzyl chloride or hexadecyl chloride; epoxides like glycidol, epichlorohydrin, ethylene oxide; acrylic acid, dimethyl sulfate; methyl sulfate, and propane sultone.

Preferred monomers for making hard polymers are, in amount of 10-90 % (w/w): methyl methacrylate, cyclohexyl methacrylate, trimethylcyclohexyl methacrylate, isobornyl methacrylate, isopropyl methacrylate, isobutyl methacrylate, tert-butyl methacrylate or hexafluorisopropyl methacrylate, styrene, tert.butyl-styrene, or mixtures thereof.

For soft polymers the preferred monomers are: 2-ethylhexyl acrylate, n-butyl acrylate, n-butyl methacrylate, n-octyl acrylate, and 2-ethoxyethyl-acrylate, methyl acrylate or mixtures thereof; for hydrogels: 2-hydroxyethyl methacrylate; N,N-dimethylacrylamide; acrylic and methacrylic acid, N-vinyl-2-pyrrolidone or mixtures thereof.

A wide range of divinyl compounds can be used in addition to the monovinyl compounds. Indeed, from 0 to 50 % by weight of the total monomer can be a diolefinic monomer. Examples of diolefinic monomers are:

Allyl acrylate and methacrylate, ethylene glycol-, diethylene glycol-, triethylene glycol-, tetraethylene glycol-, and generally polyethylene oxide glycol diacrylates and dimethacrylates; 1,4-butane diol and poly-n-butylene oxide glycol diacrylates and dimethacrylates; propylene glycol and polypropylene oxide glycol diacrylates and dimethacrylates; thiodiethylene glycol diacrylate and dimethacrylate; neopentylene glycol diacrylate and dimethacrylate; trimethylolpropane tri and tetraacrylate; pentaerythritol tri and tetraacrylate; divinylbenzene; divinyl ether; divinyl sulfone; disiloxanyl-bis-3-hydroxy propyl diacrylate or methacrylate; bisphenol A diacrylate or dimethacrylate; ethoxylated bisphenol A diacrylate or dimethacrylate; methylene bisacrylamide or methacrylamide, dimethylene bisacrylamide or methacrylamide; N,N'-dihydroxyethylene bisacrylamide or methacrylamide; hexamethylene bisacrylamide or methacrylamide; decamethylene bisacrylamide or methacrylamide; allyl- and diallyl maleate, triallyl melamine, diallyl itaconate, diallyl phthalate, triallyl phosphite, polyallyl sucrose, sucrose diacrylate, glucose dimethacrylate; also, unsaturated polyesters, such as poly-(alkylene-glycol maleates) and poly(alkylene-glycol fumarates), like poly(propylene glycol maleate) and poly(polyalkylene-oxide glycol maleate).

Macromeric divinyl compounds can also be used for copolmyerization like polyethylene oxide dimethacrylates, polytetraethylene oxide dimethacrylates (US 4,192,827) or polysiloxane dimethacrylates, (US 4,605,712) or perfluoroether dimethacrylates.

The polyvinyl-polysiloxane of this invention are used either by themselves or together with the mentioned comonomers to make the final oxygen permeable polymers in a last synthesis step by free radical copolymerization, either in bulk or in the presence of small amounts of solvents. The polymerization is suitably carried out with a free radical generating initiator at a temperature in the range from about 40°C to about 105°C, the preferred temperature ranges being between about 50°C and about 100°C. These initiators are preferably peroxides or azo catalysts having half-life at the polymerization temperature of at least 20 minutes. Typical useful peroxy compounds include isopropyl percarbonate, tert.-butyl peroctoate, benzoyl peroxide, lauryl peroxide, decanoyl peroxide, acetyl peroxide, succinic acid peroxide, methyl ethyl ketone peroxide, tert.-butyl peroxyacetate, propionyl peroxide, 2,4-dichlorobenzoyl peroxide, tert.-butyl peroxypivalate, pelargonyl peroxide, 2,5-dimethyl-2,5-bis(2-ethylhexanoylperoxy)hexane, p-chlorobenzoyl peroxide, tert.-butylperoxybutyrate, tert.-butyl peroxymaleic acid, tert.-butylperoxyisopropyl carbonate, bis(1-hydroxycyclohexyl) peroxide; azo compounds include 2,2-azo-bisisobutyronitrile; 2,2'-azo-bis-(2,4-dimethylvaleronitrile); 1,1'-azo-bis(cyclohexane carbonitrile); and 2,2'-azo-bis(2,4-dimethyl-4-methoxyvaleronitrile).

Other free radical generating mechanisms can be employed, such as x-rays, electron-beams and UV-radiation. Preparation of contact-lens blanks or of fully molded contact lenses by UV radiation in the presence of a photoinitiator such as diethoxyacetophenone, 1-hydroxycyclohexyl phenylketone, 2,2-dimethoxy-2-phenylacetophenone, phenothiazine, diisopropylxanthogen-disulfide, benzoin and benzoin derivatives is a preferred method.

The amount of initiator can vary from 0.002 % to 1 % by weight of the monomer and macromer, but is preferably from 0.03 to 0.3 % by weight thereof.

A preferred laboratory method of preparing the polymer, in the form of a cylinder, comprises the filling of flexible polymer tubing with the preferred composition of macromer, monomers, and catalyst and reacting the mixture for approximately 2 hours at 80°C. The finished article is removed by slitting the tubing longitudinally and stripping it away from the polymer article.

Another preferred method for preparing the polymer is by irradiation with ultraviolet light in the presence of a photo-initiator and using plastic molds which are UV transparent, such as molds made of polypropylene or other UV-permeable plastics.

The reaction is preferably carried out in an inert atmosphere if done in open molds. It is known that oxygen inhibits polymerization and gives rise to extended polymerization times. If closed molds are used to form the article, the molds are composed of inert materials having low oxygen permeability and non-stick properties. Examples of suitable molding materials are poly(tetrafluoroethylene), such as Teflon® silicone rubber, polyethylene, polypropylene and polyester, such as MYLAR®. Glass and metallic molds may be used if a suitable mold-releasing agent is employed.

Another preferred embodiment of the present invention, is a copolymer as disclosed in claim 8 wherein, in the compound of formula I a, x and m are zero. In this embodiment, A is preferably of the formula Ia, R⁴ is preferably of the formula 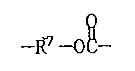
wherein R⁷ is alkylene of 2 to 6 carbon atoms, R² is alkylene of 2 to 4 carbon atoms and each -R³(OA)₂ is of the formula AOCH₂CH(OA)CH₂-. Most preferably, R² is ethylene, each A is of the formula Ia and R⁵ is methyl.

The instant invention also relates to a polymer, suitable for use in contact lenses, comprising the crosslinked copolymerization product of
(A) from 15 to 60 % by weight of said polymer of a polysiloxane macromer of formula I as disclosed in claim 8 having a molecular weight from 800 to 10,000, and containing four terminal, polymerizable olefinic groups, and
(B) 85 to 40% by weight of said polymer of water-soluble, or water-insoluble monomers or mixtures thereof, said monomers being monoolefinic, diolefinic or a mixture of monoolefinic and diolefinic monomers.

The polymers of this invention can be tailored so as to be useful either as hard contact lens material or as soft contact lens material. Different comonomers and different levels of polysiloxane macromer are required to get optimal performance in either contact lens type.

In choosing the polysiloxane component and the vinyl monomer for a hard contact lens composition, it is important to arrive at a mixture which will give clear polymers with sufficient dimensional stability and oxygen permeability. Sometimes a mixture of comonomers is advantageous in avoiding phase-separation and thereby opacity. Also, it is easier to obtain clear products with polysiloxanes of relatively low molecular weight than with high molecular weight polysiloxanes. Polysiloxanes with a short chain length between crosslinks also give harder, more dimensionally stable polymers; however, their oxygen permeability is reduced compared to polysiloxanes with longer chain length and therefore lower crosslink density. By a judicious choice of monomer(s) and polysiloxane macromer, one is thus above to tailor to a considerable degree the physical properties and oxygen permeability of the instant silicone polymers from hard and rigid to rubber and soft. In addition to hard and soft contact lenses, because of their good tissue compatibility and oxygen permeability and strength and lasticicity, the polymers of the present invention are also particularly suitable for use as intramuscular and subcutaneous implants in warm-blooded animals. For the same reasons, the materials of the present invention may be fashioned into substituted blood vessels or extracorporeal shunts.

For preparing hard contact lenses, the preferred polymer comprises the crosslinked copolymerization product of (A) from 15 to 90 % by weight of a polysiloxane macromer of formula I as disclosed in claim 8, and (B) from 85 to 10 % by weight of a mixture of water-insoluble monoolefinic monomers, said mixture comprising of 0-15 % water-soluble monoolefinic monomers and 0-20 % diolefinic monomer. The preferred water-insoluble monomers are methyl methacrylate, cyclohexyl methacrylate, tris(trimethylsiloxanyl)silylpropyl methacrylate, hexafluoroisopropylmethacrylate, trimethylcyclohexyl methacrylate, isobornyl methacrylate, tert.butyl-styrene or mixtures thereof. The preferred water-soluble monomers are 2-hydroxyethyl methacrylate, N,N-dimethylacrylamide, acrylic acid, methacrylic acid, N-vinyl-2-pyrrolidone or mixtures thereof; and the preferred diolefinic monomers are ethylene glycol dimethacrylate and neopentylglycoldiacrylate.

Further preferred is a copolymer comprising the crosslinked copolymerisation product of (A) from 15-85 % of a polysiloxane macromer of formula I as disclosed in claim 8 wherein a, x and m are zero, A is of the formula Ia, R⁴ is of the formula 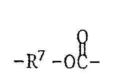
wherein R⁷ is alkylene of 2 to 6 carbon atoms, R² is alkylene of 2 to 4 carbon atoms, each -R³(OA)₂ is of the formula AOCH₂CH(OA)CH₂- and R¹ is methyl, and a) 15-85 % of a first comonomer selected from methyl methacrylate, cyclohexyl methacrylate, trimethylcyclohexyl methacrylate, isobornyl methacrylate, hexafluoroisopropyl methacrylate, t-butyl methacrylate, styrene, and t-butyl styrene; b) 0-15 % of a second comonomer selected from acrylic acid, methacrylic acid, and maleic anhydride; and c) 0-20 % of ethylene glycol dimethacrylate or neopentylglycol diacrylate.

Also preferred is a copolymer comprising the crosslinked copolymerisation product of (A) from 15-60 % of a polysiloxane macromer of formula I as disclosed in claim 8 wherein m is 1 or 2, k is one, a is zero, A is of the formula Ia, x is zero, -R³(OA)₂ is of the formula AOCH₂CH(OA)CH₂-, R⁵ is methyl and R¹ is methyl or wherein m is 1 or 2, k is one, a is zero, A is of the formula Ia, x is zero, -R³(OA)₂ is of the formula AOCH₂CH(OA)CH₂-, R⁵ is methyl, R¹ is methyl and wherein R² is ethylene and R⁶ is a divalent hydrocarbyl aliphatic, cycloaliphatic, aromatic or araliphatic group of up to 16 carbon atoms, and a) 40-85 % of a first comonomer selected from methyl methacrylate, cyclohexyl methacrylate, trimethylcyclohexyl methacrylate, isobornyl methacrylate, hexafluoroisopropyl methacrylate, t-butyl methacrylate, styrene, and t-butyl styrene; b) 0-15 % of a second comonomer selected from acrylic acid, methacrylic acid, and maleic anhydride; and c) 0-20 % of ethylene glycol dimethacrylate or neopentylglycol diacrylate.

Although this invention is primarily directed toward the synthesis of hard contact lens materials, it is also possible to make soft contact lens materials as well as hydrogel type contact lenses.

For preparing contact lenses with low water absorption, the preferred polymer comprises the crosslinked copolymerization product of (A) 30 to 80 % by weight of a polysiloxane macromer of formula I as disclosed in claim 8 and (B) 70 to 20 % by weight of water-insoluble monoolefinic monomer, or monomer mixture containing up to 10 % water soluble monoolefinic monomer.

For making soft contact lenses the preferred water-insoluble monomers are methyl acrylate, ethyl acrylate or methacrylate, n-butyl acrylate or methacrylate, n-hexyl acrylate or methacrylate, 2-ethylhexyl acrylate or methacrylate, n-octyl acrylate or methacrylate, n-decyl acrylate or methacrylate and oligo-siloxanyl alkyl methacrylates, like tris-(trimethyl siloxanyl)silyl-propyl-methacrylate.

For preparing hydrogel contact lenses, the preferred polymer comprises the crosslinked copolymerization product of 20 to 60% by weight of a polysiloxane macromer of formula I as disclosed in claim 8, with from 80 to 40 % by weight of primarily water-soluble monomers. The preferred water-soluble monomers are N,N-dimethylacrylamide, N-vinyl-2-pyrrolidone, 2-hydroxyethyl methacrylate, acrylamide, or mixtures thereof.

The polysiloxane-copolymers of this invention may also be treated by any of the commonly used methods used to increase the wettability of hydrophobic surfaces, such as plasma-treatment and irradiation-grafting and oxidation.

The contact lenses made from the polymers of this invention are fillerless, hydrolytically stable, biologically inert, transparent and sufficiently permeable to oxygen to allow the transport of oxygen generally sufficient to meet the requirements of the human cornea.

The following examples are presented for the purpose of illustration only and are not to be construed to limit the nature and scope of the instant invention in any manner whatsoever.

In the following examples, specific oxygen permeability (O₂-DK) is determined by measuring oxygen permeability at indicated temperatures and thickness with a CREATECH PERMEOMETER, using a polarographic electrode in an airsaturated aqueous environment and is expressed in units of DK where DK is cm²/sec (mlO₂/ml mmHg)x10¹¹.

As reference materials for O₂-DK measurements, water swollen poly(2-hydroxyethyl methacrylate) (poly-hema; 39 % water content; a common soft-lens material) and CAB, cellulose-acetatebutyrate (an oxygen-permeable hard-lens material) are used; for hardness CAB and poly(methyl methacrylate) are used as reference materials. The O₂-DK, Shore-D and contact angle values for these materials are given below.

Hardness is determined using a Shore-D durometer on polished surfaces of center cut buttons of 10 mm diameter and 8 mm height.

| Reference Material | O₂-DK | Shore-D |
|---|---|---|
| poly-hema (39 % H₂O) | 7.5 | - |
| poly(methyl methacrylate) | <0.1 | 92 |
| cellulose-acetate-butyrate | 8.2 | 80 |

Example 1: 26.7 g (0.0872 equivalents of hydroxy groups) of a polysiloxane-dialkyltetrol (MW 1226) of the structure of formula II where m and a are zero, R¹ is methyl, R² is -CH₂CH₂CH₂-, each -R³(OH)₂ is HOCH₂CH(OH)CH₂-, and n is about 12, are mixed in a reaction flask with 13.5 g (0.0871 mol) isocyanatoethyl methacrylate (IEM, from DOW Chem. Corp.) and 0.02 g dibutyltindilaurate (DBTL). The mixture is stirred under a dry nitrogen blanket at 50°C until all NCO groups have disappeared, as determined by IR spectroscopy. The slightly more viscous reaction product, consisting of a polysiloxane terminated on both ends with bis-methacrylatealkyl groups, is stored in the dark under nitrogen.

Example 2: 64.50 g (0.064 eqv) of a polysiloxane-dialkyltetrol (MW 4031), identical to that of example 1, except that n is approximately 52 are mixed in a reaction flask with 13.28 g (0.064 eqv) m-isopropenyl-alpha,alpha-dimethylbenzyl isocyanate (m-TMI, from Am. Cyan. Co.) and 0.028 g DBTL. The mixture is stirred under dry nitrogen at 24°C until all NCO groups have disappeared, as determined by IR. The clear, viscous reaction product, consisting of a polysiloxane terminated at both ends with urethane connected alpha-methyl styryl groups is stored in the dark under nitrogen.

Example 3 and 4: Using the same procedure as described in example 1, polysiloxane tetramethacrylates are prepared by reacting the reactants listed in the table, wherein the polysiloxane dialkyltetrols are identical to example 1 except for the value of n:

| Example | n | Polysiloxane-Tetrol | | | IEM g | mol |
|---|---|---|---|---|---|---|
| | | MW | g | eqv. | | |
| 3 | 40 | 3404 | 19.4 | 0.0228 | 3.53 | 0.0227 |
| 4 | 77 | 6287 | 19.0 | 0.0121 | 1.07 | 0.0120 |

Examples 5-9: Synthesis of polymers useful as oxygen permeable hard contact lenses:
50 g of the PDMS (=polydimethylsiloxane)-tetramethacrylate of example 1 are dissolved in 50 g freshly distilled methyl methacrylate (MMA) together with 0.02 g benzoin methyl ether (BME). The mixtures are three times degassed in vacuo and under a nitrogen blanket, filled into round polypropylene button molds of 1 cm height and 1 cm diameter. The molds are exposed to UV light for 5 hours, then heated to 100°C and allowed to slowly cool to room-temperature. 0.2 mm thick slices are cut and polished and their oxygen permeability is determined to be 20 (barrers), with a Shore-D hardness of 74.

Using the same procedure the following polymers are prepared and their hardness and oxygen permeability measured:

| Ex. No. | Composition % | | | | Shore-D | O₂-DK (barrers) 0.25 mm/22°C |
|---|---|---|---|---|---|---|
| | Tetra-MA of ex. | % | MMA | TMMA 1) | | |
| 5 | 1 | 50 | - | 50 | 73 | 28 |
| 6 | 3 | 40 | 60 | - | 79 | 36 |
| 7 | 4 | 40 | 60 | - | 73 | 78 |
| 8 | 3 | 40 | - | 60 | 75 | 44 |
| 9 | 2+3 (1:1) | 40 | 60 | - | 77 | 52 |

| | | | | | | |
|---|---|---|---|---|---|---|
| 1) TMMA = trimethyl-cyclohexyl methacrylate | | | | | | |

Examples 10-21: Using the procedure of example 5 the following polymers are prepared and their physical properties determined. All samples contain 9 % methacrylic acid.

| Ex. No. | Composition | | | | Shore-D hardness | O₂-DK (barrers) at 0.25 mm and 22°C |
|---|---|---|---|---|---|---|
| | Tetra MA of ex. | % | Comonomer 1) type | % | | |
| 10 | 3 | 40 | MMA | 51 | 79 | 35 |
| 11 | 3 | 40 | TMMA | 51 | 77 | 41 |
| 12 | 3 | 40 | IBMA | 51 | 79 | 33 |
| 13 | 3 | 40 | CYMA | 51 | 78 | 29 |
| 14 | 3 | 38 | MMA | 53 | 80 | 32 |
| 15 | 3 | 38 | TMMA | 53 | 78 | 35 |
| 16 | 3 | 38 | IBMA | 53 | 80 | 29 |
| 17 | 3 | 35 | MMA | 56 | 81 | 22 |
| 18 | 3 | 35 | TMMA | 56 | 80 | 23 |
| 19 | 4 | 40 | CYMA | 51 | 72 | 55 |
| 20 | 4 | 40 | MMA | 51 | 70 | 61 |
| 21 | 4 | 40 | TMMA | 51 | 71 | 53 |

| | | | | | | |
|---|---|---|---|---|---|---|
| 1) MMA methyl-methacrylate TMMA trimethyl cylcohexyl-methacrylate IBMA isobornyl-methacrylate CYMA cyclohexyl-methacrylate | | | | | | |

Examples 22-24: Using the same procedure as described in example 5 the following polymers are prepared and their physical properties determined. All samples contain 9 % methacrylic acid.

| Ex. No. | Composition (%) | | Shore-D hardness | O₂-DK (barrers) at 0.25 mm and 22°C |
|---|---|---|---|---|
| | Tetra MA of ex. 1(%) | MMA % | | |
| 22 | 55 | 36 | 86 | 7.5 |
| 23 | 75 | 16 | 82 | 19 |
| 24 | 85 | 6 | 78 | 37.0 |

Example 25: The tetra-styryl PDMS macromer of example 2 is used to make a polymer according to the procedure described in example 5 with the following composition and properties:
38 % PDMS-tetra-styryl of example 2;
53 % MMA,
9 % methacrylic acid
Shore-D hardness: 82; O₂-DK (barrers): 25 (0.25 mm/22°C).

Examples 26 and 27: Following the procedure of example 5 the following two polymers are synthesized and evaluated:

| Composition | Ex. 26 | Ex. 27 |
|---|---|---|
| PDMS-tetramethacrylate of Ex. 3 | 35 % | 30 % |
| MMA | 48 % | 53 % |
| hexafluoroisopropyl-methacrylate (HFMA) | 8 % | 8 % |
| methacrylic acid (MAA) | 9 % | 9 % |
| Shore-D hardness | 81 | 84 |
| O₂-DK (barrers) (0.25 mm/22°C) | 32 | 20 |

Examples 28-30: The polymers of examples 10, 20 and 17 are prepared in form of 1 mm thick sheets by casting them in a MYLAR® lined glass mold, using a 1 mm silicone-cord spacer and held together by clamps. The sheets are tested for physical properties on an INSTRON testing apparatus.

| Ex. No. | Pol. of Ex. | MW of tetrol | Tensile Str. | Youngs Mod. | Elongation (%) |
|---|---|---|---|---|---|
| | | | (kg/mm²) | | |
| 28 | 10 | 3404 | 3.62 | 85.2 | 17.3 |
| 29 | 20 | 6287 | 3.11 | 68.6 | 21.7 |
| 30 | 17 | 3404 | 3.73 | 80.1 | 8.6 |

Example 31: Synthesis of chain extended PDMS-polyacrylates.
Step I: 64.50 g (0.016 m) of the polydimethylsiloxane tetrol (PDMS) of example 2 having a MW of 4031 are mixed in a reaction flask with 1.78 g (0.009 m) isophorone diisocyanate (IPDI) and 0.027 g DBTL. The mixture is stirred under a dry-N₂ blanket for 12 hours at 25°C until all NCO groups have disappeared. The viscous reaction product has an equ. weight of 1388.5 (theo.: 1380.7) (MW calc: 8330.7).
Step II: 5.0 g (0.0006 mole) of the chain extended hex-ol (MW 8330.7) are dissolved in 5.37 g of methyl methacrylate and then 0.37 g (0.0024 mole) of isocyanatoethyl methacrylate are added. The mixture is mixed under a dry N₂ blanket for 16 hours at 25°C until all -NCO functionality has disappeared as determined by IR analysis.

Examples 32-34: Using the same step I procedure, chain extended polyols are prepared, but using a tetrol of 1219 MW and instead of a 2:1 (tetrol:IPDI) mol-ratio a mol ratio of 3:2, giving a chain extended polyol of equ. w. 530.5 (MW calc. = 4244), which theoretically is a octa-hydroxy compound.

Both chain-extended polyols are reacted as described for step II above with IEM in the following mol ratios:

| Ex. | PDMS-tetrol/diisocyanate | | OH-functionality of product | Moles IEM added |
|---|---|---|---|---|
| | (MW) | mol-ratio | | |
| 31 | 4031 | 2:1 | 6 | 4 |
| 32 | 4031 | 2:1 | 6 | 3 |
| 33 | 4031 | 2:1 | 6 | 5.9 |
| 34 | 1219 | 3:2 | 8 | 4 |

Examples 35-38: Synthesis of hard contact lens buttons.

2.45 g of the chain extended PDMS tetramethacrylate mixtures (50 % in methyl methacrylate) are mixed with 0.73 g of methyl methacrylate and 0.32 g of methacrylic acid and 0.007 g of benzoin methyl ether.
The mixture, consisting of 35 % PDMS-acrylate, 56 % MMA and 9 % MAA, is degassed, then filled into contact lens button molds and polymerized by UV light for 4 hours, then heated at 100°C for 1 hour. Hard clear buttons are obtained. The Shore-D hardness is determined to be 75.

Using the same procedure, clear buttons with the same compositions are prepared from the PDMS-methacrylates of examples 32-34.

| Ex. | PDMS-methacrylate of Ex. | Shore-D |
|---|---|---|
| 35 | 31 | 75 |
| 36 | 32 | 73 |
| 37 | 33 | 77 |
| 38 | 34 | 84 |

The polymer of ex. 38 has an oxygen permeability DK of 31.5 (barrers) (0.27 mm/24°C).

Example 39: Synthesis of PDMS-tetramethacrylate from a PDMS-di-alkanol, diisocyanate and glycerol-dimethacrylate.

24.0 g (0.01 m) of a polydimethylsiloxane-dipropanol of MW 2400 (Shin-Etsu X-61-A1000) are placed into a reaction flask equipped with stirrer, condenser and N₂-sparge, 4.67 g (0.021 m) isophorone diisocyanate are added together with 0.01 g dibutyltin-dilaurate. The mixture is stirred at 24°C for 24 hours, until the NCO-content has fallen to 1/2 of its original value, as determined by titration. 29.75 g methyl methacrylate (MMA) are added to 25.7 g of this NCO-prepolymer to reduce the viscosity, followed by 4.09 g (0.0208 m) glycerol-dimethacrylate (Rohm Tech.). The mixture is stirred at 24°C until all NCO has disappeared.

The PDMS-tetra-methacrylate is further diluted with MMA and methacrylic acid (MAA) to give a composition of 35 % tetra-methacrylate, 56 % MMA and 9 % MAA. Contact lens buttons are prepared as described in examples 5-9; the polymer is clear and hard, with a Shore-D hardness of 82 and an oxygen-permeability DK of 13 (barrers) at 22°C/0.2 mm thickness.

Example 40: The bis-tetramethacrylate monomer product of example 1 is placed into a beaker and a length of polymethacrylate fiber, having a diameter of 25 mm and a smooth surface, placed therein. The fiber is drawn vertically from the beaker with a thin film of monomer adhering to the surface of the fiber. The monomer is polymerized by subjecting the treated fiber to an ultraviolet light source. The resulting fiber with the crosslinked polymer coating is suitable for use as an optical waveguide.

## Claims (Claims for the following Contracting State(s): AT, BE, CH, DE, FR, GB, GR, IT, LI, LU, NL, SE)

1. A poly-unsaturated polysiloxane of the formula I, 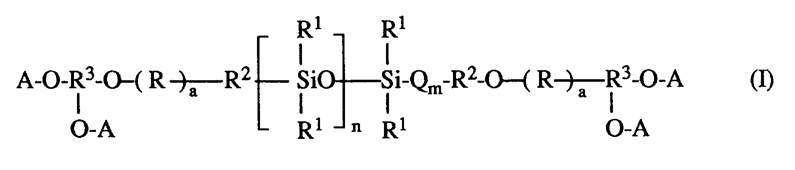 wherein a is zero or one;
n is 2 to 500;
m is zero to 2;
wherein a and m are not both zero at the same time;
wherein at least three of A either consist of a reactive vinyl containing group of the formula Ia or Ib, and the remaining A are hydrogen or said reactive vinyl containing group; 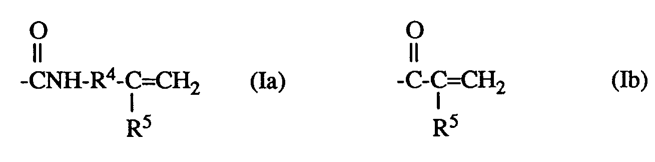 provided that at least one of A is of formula Ia in case that m is zero and a is one;
where R⁴ is arylene of 6 to 12 carbon atoms, alkarylene of 7 to 14 carbon atoms, alkylene of up to 8 carbon atoms, alkyleneoxy of up to 8 carbon atoms or a group of the formula 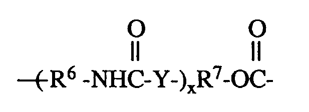 where R⁷ is alkylene of 2 to 8 carbon atoms, x is zero or one, Y is -O- or -NR⁸- where R⁸ is hydrogen or alkyl of up to 4 carbon atoms, and R⁶ is the diradical residue of an aliphatic, cycloaliphatic, aromatic or araliphatic diisocyanate;
R⁵ is hydrogen or methyl;
R¹ is alkyl of up to 4 carbon atoms or phenyl;
R² is alkylene of 2 to 6 carbon atoms;
R³ is 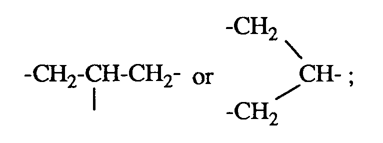 such that -R³(OA)₂ is AOCH₂CH(OA)CH₂- or (AOCH₂)₂CH-;
Q is a group of the formula Ic, 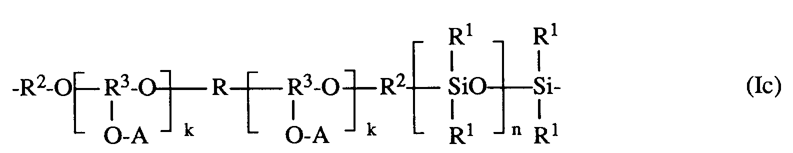 where R¹, R², R³, A and n are as defined above; and k is zero or one; and R is a group of the formula Id 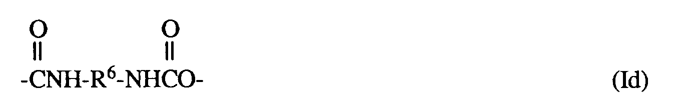 where R⁶ is as defined above.

2. A polysiloxane according to claim 1, wherein R¹ is methyl.

3. A polysiloxane according to claim 1, wherein m is 1 or 2, k is one, a is zero, A is of the formula Ia, x is zero, -R³(OA)₂ is of the formula AOCH₂CH(OA)CH₂- and R⁵ is methyl.

4. A polysiloxane according to claim 3, wherein R² is ethylene and R⁶ is a divalent hydrocarbyl aliphatic, cycloaliphatic, aromatic or araliphatic group of up to 16 carbon atoms.

5. A polysiloxane according to claim 1, wherein A is of the formula Ib, a is one, m is 1 or 2, k is zero, -R³(OA)₂ is of the formula (AOCH₂)₂CH- and R⁵ is methyl.

6. A polysiloxane according to claim 5, wherein R² is ethylene and R⁶ is a divalent hydrocarbyl aliphatic, cycloaliphatic, aromatic or araliphatic group of up to 16 carbon atoms.

7. A homopolymer of the compound of formula I according to claim 1.

8. A copolymer of the compound of formula I 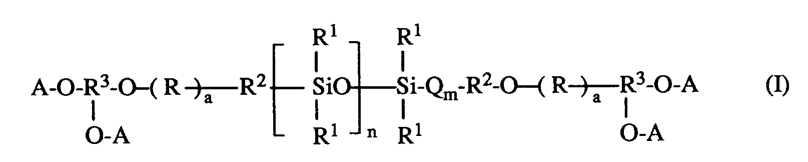 wherein a is zero or one;
n is 2 to 500;
m is zero to 2;
wherein at least three of A either consist of a reactive vinyl containing group of the formula Ia or Ib, and the remaining A are hydrogen or said reactive vinyl containing group; 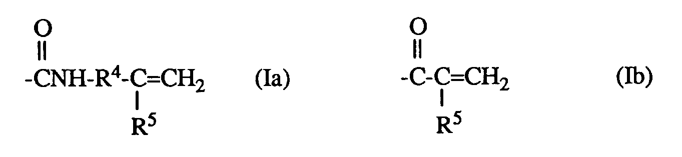 provided that at least one of A is of formula Ia in case that m is zero and a is one;
where R⁴ is arylene of 6 to 12 carbon atoms, alkarylene of 7 to 14 carbon atoms, alkylene of up to 8 carbon atoms, alkyleneoxy of up to 8 carbon atoms or a group of the formula 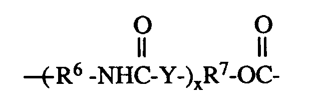 where R⁷ is alkylene of 2 to 8 carbon atoms, x is zero or one, Y is -O- or -NR⁸- where R⁸ is hydrogen or alkyl of up to 4 carbon atoms, and R⁶ is the diradical residue of an aliphatic, cycloaliphatic, aromatic or araliphatic diisocyanate;
R⁵ is hydrogen or methyl;
R¹ is alkyl of up to 4 carbon atoms or phenyl;
R² is alkylene of 2 to 6 carbon atoms;
R³ is 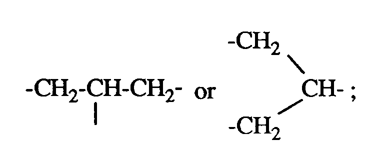 such that -R³(OA)₂ is AOCH₂CH(OA)CH₂- or (AOCH₂)₂CH-;
Q is a group of the formula Ic, 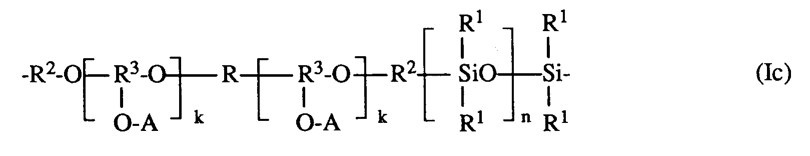 where R¹, R², R³, A and n are as defined above; and k is zero or one; and R is a group of the formula Id 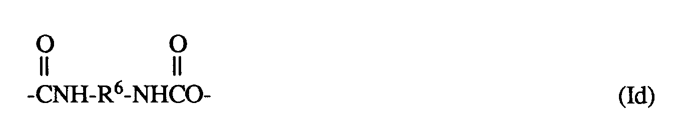 where R⁶ is as defined above;
with up to 95 percent by weight of one or more hydrophilic or hydrophobic reactive vinyl monomers, or mixtures thereof, based on the weight of polymer.

9. A copolymer according to claim 8 wherein, in the compound of formula I, a, x and m are zero, A is of the formula Ia, R⁴ is of the formula 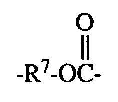 wherein R⁷ is alkylene of 2 to 6 carbon atoms, R² is alkylene of 2 to 4 carbon atoms and each -R³(OA)₂ is of the formula AOCH₂CH(OA)CH₂-.

10. A copolymer according to claim 9 wherein, in the compound of formula I, R² is ethylene, each A is of the formula Ia and R⁵ is methyl.

11. A copolymer according to claim 9 wherein, in the compound of formula I, R¹ is methyl.

12. A copolymer according to claim 8, with from 15 to 60 percent by weight of the macromer of formula I according to claim 8 and 85 to 40 percent by weight of reactive monoolefinic or diolefinic, water-soluble or water-insoluble monomer, or mixture thereof.

13. A copolymer according to claim 8, comprising the crosslinked copolymerization product of
(A) from 15 to 60% by weight of said polymer of a polysiloxane macromer of formula I according to claim 8 having a molecular weight from 800 to 10,000, and containing four terminal, polymerizable olefinic groups, and
(B) 85 to 40 % by weight of said polymer of water-soluble, or water-insoluble monomers or mixtures thereof, said monomers being monoolefinic, diolefinic or a mixture of monoolefinic and diolefinic monomers.

14. A copolymer according to claim 8, with from 15 to 90 percent by weight of the macromer of formula I according to claim 8 and 85 to 10 percent of a mixture of reactive water-insoluble monoolefinic monomers, said mixture comprising 0-15 % water-soluble monoolefinic monomers and 0-20 % diolefinic monomer.

15. A copolymer according to claim 8, with from 30 to 80 percent by weight of the macromer of formula I according to claim 8 and 70 to 20 percent by weight of a water-insoluble monoolefinic monomer, or monomer mixture containing up to 10% water soluble monoolefinic monomer.

16. A copolymer according to claim 8, with from 20 to 60 percent by weight of the macromer of formula I according to claim 8 and 80 to 40 % by weight of primarily water-soluble monomers.

17. A copolymer according to claim 8 comprising the crosslinked copolymerisation product of
A) 15-85% of the polysiloxane of claim 11;
a) 15-85 % of a first comonomer selected from methyl methacrylate, cyclohexyl methacrylate, trimethylcyclohexyl methacrylate, isobornyl methacrylate, hexafluoroisopropyl methacrylate, t-butyl methacrylate, styrene, and t-butyl styrene;
b) 0-15 % of a second comonomer selected from acrylic acid, methacrylic acid, and maleic anhydride; and
c) 0-20% of ethylene glycol dimethacrylate or neopentylglycol diacrylate.

18. A copolymer according to claim 8 comprising the crosslinked copolymerisation product of
A) 15-60 % of the polysiloxane of claim 8 wherein R¹ is methyl and wherein m is 1 or 2, k is one, a is zero, A is of the formula Ia, x is zero, -R³(OA)₂ is of the formula AOCH₂CH(OA)CH₂- and R⁵ is methyl, or wherein R¹ is methyl and wherein R² is ethylene and R⁶ is a divalent hydrocarbyl aliphatic, cycloaliphatic, aromatic or araliphatic group of up to 16 carbon atoms;
a) 40-85 % of a first comonomer selected from methyl methacrylate, cyclohexyl methacrylate, trimethylcyclohexyl methacrylate, isobornyl methacrylate, hexafluoroisopropyl methacrylate, t-butyl methacrylate, styrene, and t-butyl styrene;
b) 0-15 % of a second comonomer selected from acrylic acid, methacrylic acid, and maleic anhydride; and
c) 0-20 % of ethylene glycol dimethacrylate or neopentylglycol diacrylate.

19. A contact lens formed of a homopolymer of a compound of formula I as disclosed in claim 8.

20. A contact lens formed of a copolymer according to claim 8.

21. A contact lens formed of a copolymer according to claim 12.

22. A contact lens formed of a copolymer according to any of claims 14, 15 or 16.

23. A contact lens formed of a copolymer according to any of claims 17 or 18.

## Claims (Claims for the following Contracting State(s): ES)

1. A process for the manufacture of a poly-unsaturated polysiloxane of the formula I, 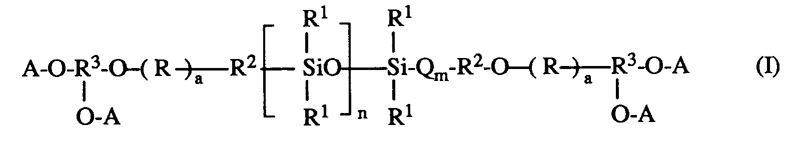 wherein a is zero or one;
n is 2 to 500;
m is zero to 2;
wherein a and m are not both zero at the same time;
wherein at least three of A either consist of a reactive vinyl containing group of the formula Ia or Ib, and the remaining A are hydrogen or said reactive vinyl containing group; 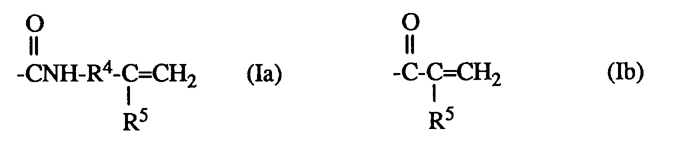 provided that at least one of A is of formula Ia in case that m is zero and a is one;
where R⁴ is arylene of 6 to 12 carbon atoms, alkarylene of 7 to 14 carbon atoms, alkylene of up to 8 carbon atoms, alkyleneoxy of up to 8 carbon atoms or a group of the formula 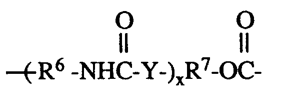 where R⁷ is alkylene of 2 to 8 carbon atoms, x is zero or one, Y is -O- or -NR⁸- where R⁸ is hydrogen or alkyl of up to 4 carbon atoms, and R⁶ is the diradical residue of an aliphatic, cycloaliphatic, aromatic or araliphatic diisocyanate;
R⁵ is hydrogen or methyl;
R¹ is alkyl of up to 4 carbon atoms or phenyl;
R² is alkylene of 2 to 6 carbon atoms;
R³ is 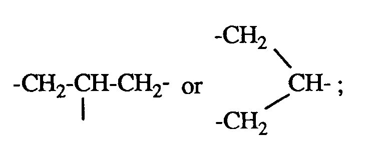 such that -R³(OA)₂ is AOCH₂CH(OA)CH₂- or (AOCH₂)₂CH-;
Q is a group of the formula Ic, 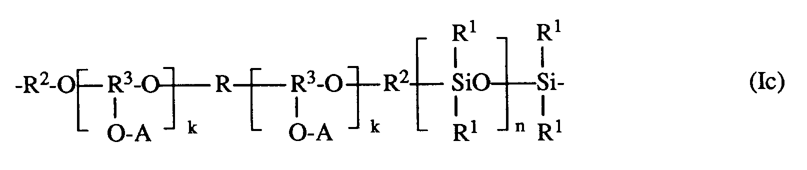 where R¹, R², R³, A and n are as defined above; and k is zero or one; and R is a group of the formula Id 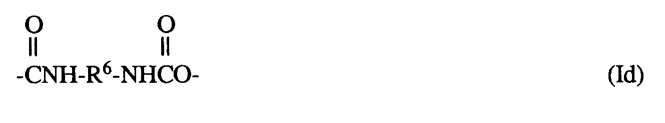 where R⁶ is as defined above;
characterized in that a polysiloxane polyol of the formula II, 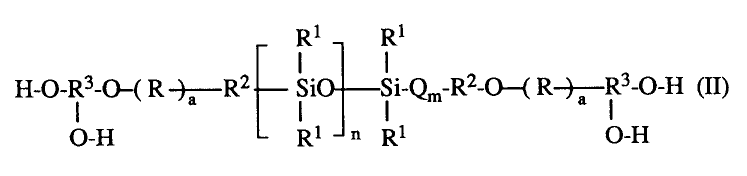 wherein the variables are as defined above is reacted with an isocyanato substituted vinyl compound of the formula III, 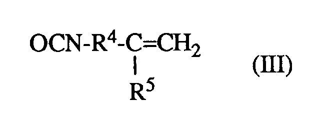 wherein R⁴ and R⁵ are as defined above or with a respective acrylic or methacrylic acid derivative introducing the group of formula Ib.

2. A process according to claim 1, wherein R¹ is methyl.

3. A process according to claim 1, wherein m is 1 or 2, k is one, a is zero, A is of the formula Ia, x is zero, -R³(OA)₂ is of the formula AOCH₂CH(OA)CH₂- and R⁵ is methyl.

4. A process according to claim 3, wherein R² is ethylene and R⁶ is a divalent hydrocarbyl aliphatic, cycloaliphatic, aromatic or araliphatic group of up to 16 carbon atoms.

5. A process according to claim 1, wherein A is of the formula Ib, a is one, m is 1 or 2, k is zero, -R³(OA)₂ is of the formula (AOCH₂)₂CH- and R⁵ is methyl.

6. A process according to claim 5, wherein R² is ethylene and R⁶ is a divalent hydrocarbyl aliphatic, cycloaliphatic, aromatic or araliphatic group of up to 16 carbon atoms.

7. A process for the manufacture of a homopolymer of the compound of formula I according to claim 1 characterized in that the compound of formula I is polymerized in a manner known per se.

8. A process for the manufacture of a copolymer of the compound of formula I 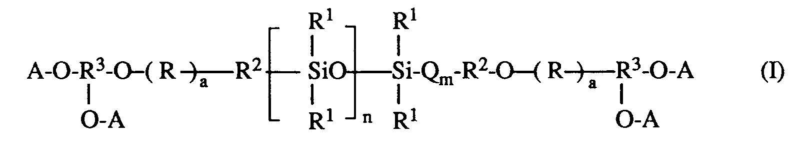 wherein a is zero or one;
n is 2 to 500;
m is zero to 2;
wherein at least three of A either consist of a reactive vinyl containing group of the formula Ia or Ib, and the remaining A are hydrogen or said reactive vinyl containing group; 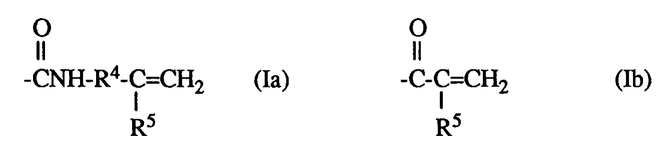 provided that at least one of A is of formula Ia in case that m is zero and a is one;
where R⁴ is arylene of 6 to 12 carbon atoms, alkarylene of 7 to 14 carbon atoms, alkylene of up to 8 carbon atoms, alkyleneoxy of up to 8 carbon atoms or a group of the formula 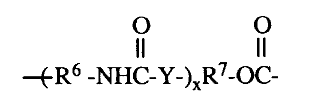 where R⁷ is alkylene of 2 to 8 carbon atoms, x is zero or one, Y is -O- or -NR⁸- where R⁸ is hydrogen or alkyl of up to 4 carbon atoms, and R⁶ is the diradical residue of an aliphatic, cycloaliphatic, aromatic or araliphatic diisocyanate;
R⁵ is hydrogen or methyl;
R¹ is alkyl of up to 4 carbon atoms or phenyl;
R² is alkylene of 2 to 6 carbon atoms;
R³ is 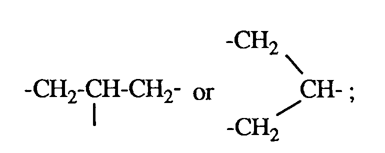 such that -R³(OA)₂ is AOCH₂CH(OA)CH₂- or (AOCH₂)₂CH-;
Q is a group of the formula Ic, 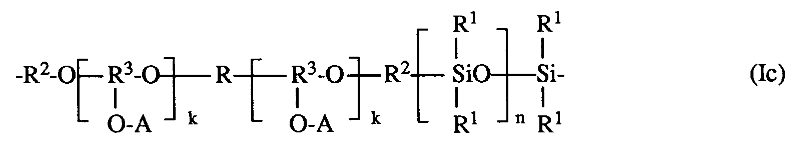 where R¹, R², R³, A and n are as defined above; and k is zero or one; and R is a group of the formula Id 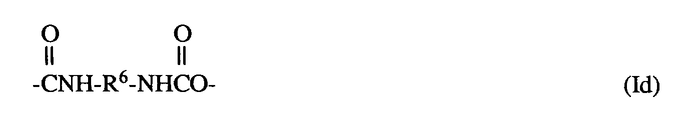 where R⁶ is as defined above;
with up to 95 percent by weight of one or more hydrophilic or hydrophobic reactive vinyl monomers, or mixtures thereof, based on the weight of polymer,
characterized in that the compound of formula I and the vinyl monomer(s) are copolymerized in a manner known per se..

9. A process for the manufacture of a copolymer according to claim 8 wherein, in the compound of formula I, a, x and m are zero, A is of the formula Ia, R⁴ is of the formula 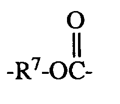 wherein R⁷ is alkylene of 2 to 6 carbon atoms, R² is alkylene of 2 to 4 carbon atoms and each -R³(OA)₂ is of the formula AOCH₂CH(OA)CH₂-.

10. A process for the manufacture of a copolymer according to claim 9 wherein, in the compound of formula I, R² is ethylene, each A is of the formula Ia and R⁵ is methyl.

11. A process for the manufacture of a copolymer according to claim 9 wherein, in the compound of formula I, R¹ is methyl.

12. A process for the manufacture of a copolymer according to claim 8, with from 15 to 60 percent by weight of the macromer of formula I according to claim 8 and 85 to 40 percent by weight of reactive monoolefinic or diolefinic, water-soluble or water-insoluble monomer, or mixture thereof.

13. A process for the manufacture of a copolymer according to claim 8, comprising the crosslinking copolymerization of
(A) from 15 to 60 % by weight of said polymer of a polysiloxane macromer of formula I according to claim 8 having a molecular weight from 800 to 10,000, and containing four terminal, polymerizable olefinic groups, and
(B) 85 to 40 % by weight of said polymer of water-soluble, or water-insoluble monomers or mixtures thereof, said monomers being monoolefinic, diolefinic or a mixture of monoolefinic and diolefinic monomers.

14. A process for the manufacture of a copolymer according to claim 8, with from 15 to 90 percent by weight of the macromer of formula I according to claim 8 and 85 to 10 percent of a mixture of reactive water-insoluble monoolefinic monomers, said mixture comprising 0-15 % water-soluble monoolefinic monomers and 0-20 % diolefinic monomer.

15. A process for the manufacture of a copolymer according to claim 8, with from 30 to 80 percent by weight of the macromer of formula I according to claim 8 and 70 to 20 percent by weight of a water-insoluble monoolefinic monomer, or monomer mixture containing up to 10 % water soluble monoolefinic monomer.

16. A process for the manufacture of a copolymer according to claim 8, with from 20 to 60 percent by weight of the macromer of formula I according to claim 8 and 80 to 40 % by weight of primarily water-soluble monomers.

17. A process for the manufacture of a copolymer according to claim 8 comprising the crosslinking copolymerisation of
A) 15-85 % of the polysiloxane of claim 11;
a) 15-85 % of a first comonomer selected from methyl methacrylate, cyclohexyl methacrylate, trimethylcyclohexyl methacrylate, isobornyl methacrylate, hexafluoroisopropyl methacrylate, t-butyl methacrylate, styrene, and t-butyl styrene;
b) 0-15 % of a second comonomer selected from acrylic acid, methacrylic acid, and maleic anhydride; and
c) 0-20 % of ethylene glycol dimethacrylate or neopentylglycol diacrylate.

18. A process for the manufacture of a copolymer according to claim 8 comprising the crosslinking copolymerisation of
A) 15-60 % of the polysiloxane of claim 8 wherein R¹ is methyl and wherein m is 1 or 2, k is one, a is zero, A is of the formula Ia, x is zero, -R³(OA)₂ is of the formula AOCH₂CH(OA)CH₂- and R⁵ is methyl, or wherein R¹ is methyl and wherein R² is ethylene and R⁶ is a divalent hydrocarbyl aliphatic, cycloaliphatic, aromatic or araliphatic group of up to 16 carbon atoms;
a) 40-85 % of a first comonomer selected from methyl methacrylate, cyclohexyl methacrylate, trimethylcyclohexyl methacrylate, isobornyl methacrylate, hexafluoroisopropyl methacrylate, t-butyl methacrylate, styrene, and t-butyl styrene;
b) 0-15 % of a second comonomer selected from acrylic acid, methacrylic acid, and maleic anhydride; and
c) 0-20 % of ethylene glycol dimethacrylate or neopentylglycol diacrylate.

19. A contact lens formed of a homopolymer of a compound of formula I as disclosed in claim 8.

20. A contact lens formed of a copolymer according to claim 8.

21. A contact lens formed of a copolymer according to claim 12.

22. A contact lens formed of a copolymer according to any of claims 14, 15 or 16.

23. A contact lens formed of a copolymer according to any of claims 17 or 18.

## Patentansprüche (Patentansprüche für folgende(n) Vertragsstaat(en): AT, BE, CH, DE, FR, GB, GR, IT, LI, LU, NL, SE)

1. Poly-ungesättigtes Polysiloxan der Formel I 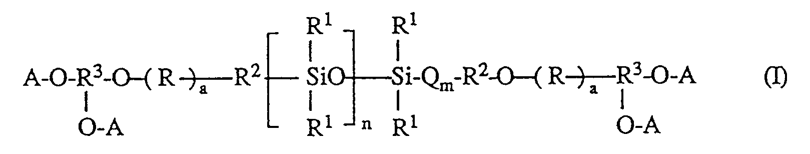 worin
a = 0 oder 1
n = 2 bis 500
m = 0 bis 2
worin a und m beide nicht gleichzeitig 0 sind;
worin wenigstens drei von A entweder aus einer reaktiven vinylhaltigen Gruppe der Formel Ia oder Ib besteht, und das verbleibende A Wasserstoff oder diese reaktive vinylhaltige Gruppe ist; 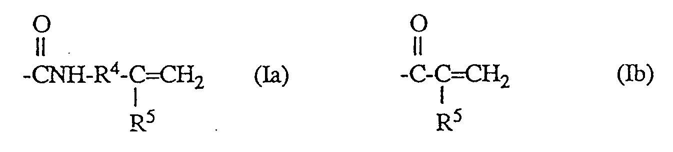 vorausgesetzt, daß wenigstens eines von A die Formel Ia hat im Falle, daß m = 0 ist und a = 1 ist; worin R⁴ Arylen mit 6 bis 12 Kohlenstoffatomen ist, Alkarylen mit 7 bis 14 Kohlenstoffatomen ist, Alkylen mit bis zu 8 Kohlenstoffatomen ist, Alkylenoxy mit bis zu 8 Kohlenstoffatomen ist oder eine Gruppe der Formel 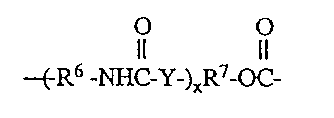 ist, wobei R⁷ Alkylen mit 2 bis 8 Kohlenstoffatomen ist, x = 0 oder 1 ist, Y -O- oder -NR⁸- ist, wobei R⁸ Wasserstoff oder Alkyl mit bis zu 4 Kohlenstoffatomen ist, und R⁶ der Diradikalrest eines aliphatischen, cycloaliphatischen, aromatischen oder araliphatischen Diisocyanats ist;
R⁵ ist Wasserstoff oder Methyl;
R¹ ist Alkyl mit bis zu 4 Kohlenstoffatomen oder Phenyl;
R² ist Alkylen mit 2 bis 6 Kohlenstoffatomen;
R³ ist 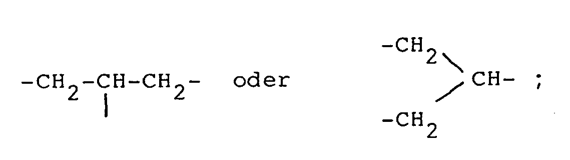 derart, daß
-R³(OA)₂ für AOCH₂CH(OA)CH₂- oder (AOCH₂)₂CH- steht;
Q ist eine Gruppe der Formel Ic, 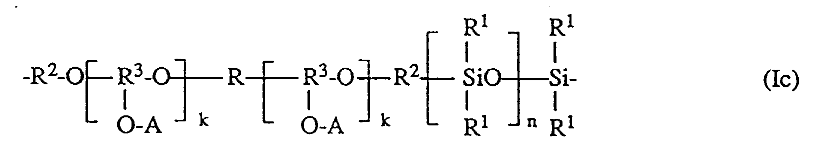 worin R¹, R², R³, A und n wie vorstehend definiert sind;
und k = 0 oder 1; und R ist eine Gruppe der Formel Id 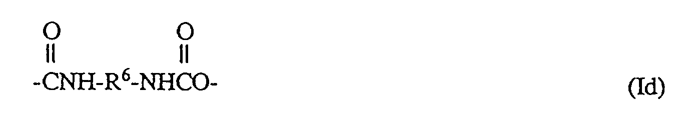 worin R⁶ wie oben definiert ist.

2. Polysiloxan gemäß Anspruch 1, worin R¹ Methyl ist.

3. Polysiloxan gemäß Anspruch 1, worin m = 1 oder 2 ist, k = 1 ist, a = 0 ist, A die Formel Ia aufweist, x = 0 ist, -R³(OA)₂ die Formel AOCH₂CH(OA)CH₂- aufweist, und R⁵ Methyl ist.

4. Polysiloxan gemäß Anspruch 3, worin R² Ethylen ist und R⁶ eine zweiwertige aliphatische, cycloaliphatische, aromatische oder araliphatische Kohlenwasserstoffgruppe mit bis zu 16 Kohlenstoffatomen ist.

5. Polysiloxan gemäß Anspruch 1, worin A der Formel Ib entspricht, a = 1 ist, m = 1 oder 2 ist, k = 0 ist, -R³(OA)₂ der Formel (AOCH₂)₂CH- entspricht, und R⁵ Methyl ist.

6. Polysiloxan gemäß Anspruch 5, worin R² Ethylen ist und R⁶ eine zweiwertige aliphatische, cycloaliphatische, aromatische oder araliphatische Kohlenwasserstoffgruppe mit bis zu 16 Kohlenstoffatomen ist.

7. Homopolymeres der Verbindung der Formel I gemäß Anspruch 1.

8. Copolymeres der Verbindung der Formel I 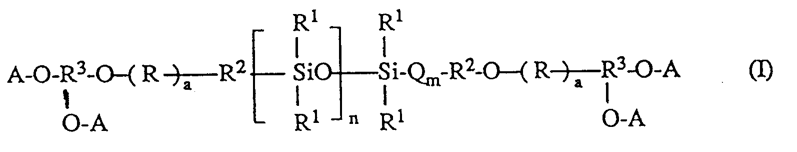 worin
a = 0 oder 1
n = 2 bis 500
m = 0 bis 2
worin wenigstens drei von A entweder aus einer reaktiven vinylhaltigen Gruppe der Formel Ia oder Ib besteht, und das verbleibende A Wasserstoff oder diese reaktive vinylhaltige Gruppe ist; 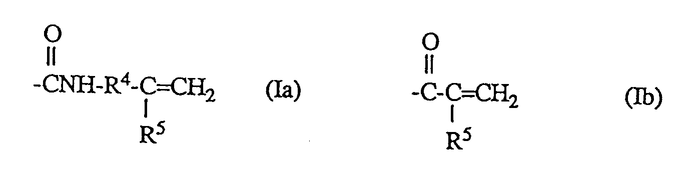 vorausgesetzt, daß wenigstens eines von A die Formel Ia hat im Falle, daß m = 0 ist und a = 1 ist; worin R⁴ Arylen mit 6 bis 12 Kohlenstoffatomen ist, Alkarylen mit 7 bis 14 Kohlenstoffatomen ist, Alkylen mit bis zu 8 Kohlenstoffatomen ist, Alkylenoxy mit bis zu 8 Kohlenstoffatomen ist oder eine eine Gruppe der Formel 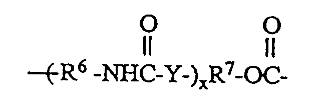 ist, wobei R⁷ Alkylen mit 2 bis 8 Kohlenstoffatomen ist, x = 0 oder 1 ist, Y -O- oder -NR⁸- ist, wobei R⁸ Wasserstoff oder Alkyl mit bis zu 4 Kohlenstoffatomen ist, und R⁶ der Diradikalrest eines aliphatischen, cycloaliphatischen, aromatischen oder araliphatischen Diisocyanats ist;
R⁵ ist Wasserstoff oder Methyl;
R¹ ist Alkyl mit bis zu 4 Kohlenstoffatomen oder Phenyl;
R² ist Alkylen mit 2 bis 6 Kohlenstoffatomen;
R³ ist 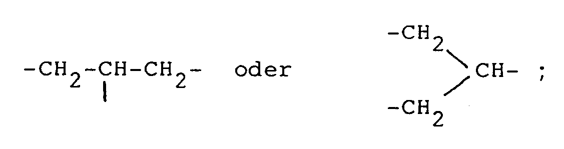 derart, daß
-R³(OA)₂ für AOCH₂CH(OA)CH₂- oder (AOCH₂)₂CH- steht;
Q ist eine Gruppe der Formel Ic, 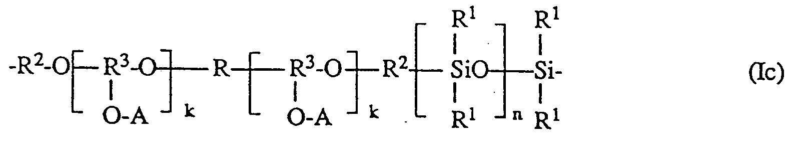 worin R¹, R², R³, A und n wie vorstehend definiert sind;
und k = 0 oder 1; und R ist eine Gruppe der Formel Id 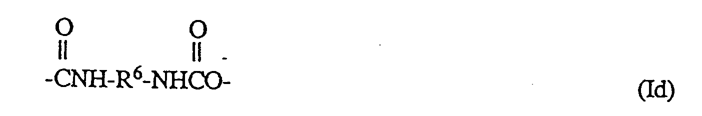 worin R⁶ wie oben definiert ist;
mit bis zu 95 Gew.-% von einem oder mehreren hydrophilen oder hydrophoben reaktiven Vinylmonomeren oder Mischungen davon, auf Basis des Gewichts des Polymeren.

9. Copolymeres gemäß Anspruch 8, worin in der Verbindung der Formel I a, x und m = 0 sind, A der Formel Ia entspricht, R⁴ der Formel 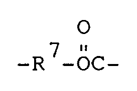 entspricht, worin R⁷ Alkylen mit 2 bis 6 Kohlenstoffatomen ist, R² Alkylen mit 2 bis 4 Kohlenstoffatomen ist, und jedes -R³(OA)₂ der Formel AOCH₂CH(OA)CH₂- entspricht.

10. Copolymeres gemäß Anspruch 9, worin in der Verbindung der Formel I R² Ethylen ist, jedes A der Formel Ia entspricht, und R⁵ Methyl ist.

11. Copolymeres gemäß Anspruch 9, worin in der Verbindung der Formel I R¹ Methyl ist.

12. Copolymeres gemäß Anspruch 8 mit 15 bis 60 Gew.-% des Makromeren der Formel I gemäß Anspruch 8 und 85 bis 40 Gew.-% von reaktiven monoolefinischen oder diolefinischen, wasserlöslichen oder wasserunlöslichen Monomeren oder eine Mischung davon.

13. Copolymeres gemäß Anspruch 8, umfassend das vernetzte Copolymerisationsprodukt von
(A) 15 bis 60 Gew.-% des Polymeren eines Polysiloxanmakromoneren der Formel I gemäß Anspruch 8 mit einem Molekulargewicht von 800 bis 10 000, und enthaltend vier endständige, polymerisierbare olefinische Gruppen, und
(B) 85 bis 40 Gew.-% dieses Polymeren der wasserlöslichen oder wasserunlöslichen Monomeren oder Mischungen davon, wobei diese Monomeren monoolefinisch, diolefinisch oder eine Mischung von monoolefinischen und diolefinischen Monomeren sind.

14. Copolymeres gemäß Anspruch 8, mit 15 bis 90 Gew.-% des Makromeren der Formel I gemäß Anspruch 8 und 85 bis 10 % eines Gemisches von reaktiven wasserunlöslichen monoolefinischen Monomeren, wobei dieses Gemisch 0 bis 15 % wasserlösliche monoolefinische Monomere und 0 bis 20 % diolefinisches Monomer enthält.

15. Copolymeres gemäß Anspruch 8, mit 30 bis 80 Gew.-% des Makromeren der Formel I gemäß Anspruch 8 und 70 bis 20 Gew.-% eines wasserunlöslichen monoolefinischen Monomeren oder Monomerengemisches, enthaltend bis zu 10 % wasserlösliches monoolefinisches Monomer.

16. Copolymeres gemäß Anspruch 8, mit 20 bis 60 Gew.-% des Makromeren der Formel I gemäß Anspruch 8 und 80 bis 40 Gew.-% in erster Linie wasserlösliche Monomere.

17. Copolymeres gemäß Anspruch 8, enthaltend das vernetzte Copolymerisationsprodukt von
(A) 15 bis 85 % des Polysiloxans gemäß Anspruch 11;
a) 15 bis 85% eines ersten Comonomeren ausgewählt aus Methylmethacrylat, Cyclohexylmethacrylat, Trimethylcyclohexylmethacrylat, Isobornylmethacrylat, Hexafluorisopropylmethacrylat, t-Butylmethacrylat, Styrol und t-Butylstyrol;
b) 0 bis 15 % eines zweiten Comonomeren ausgewählt aus Acrylsäure, Methacrylsäure und Maleinsäureanhydrid; und
c) 0 bis 20 % Ethylenglykoldimethacrylat oder Neopentylglykoldiacrylat.

18. Copolymeres gemäß Anspruch 8, enthaltend das vernetzte Copolymerisationsprodukt von
(A) 15 bis 60 % des Polysiloxans gemäß Anspruch 8, worin R¹ Methyl ist und worin m = 1 oder 2 ist, k = 1 ist, a = 0 ist, A der Formel Ia entspricht, x = 0 ist, -R³(OA)₂ der Formel AOCH₂CH(OA)CH₂- entspricht, und R⁵ Methyl ist, oder worin R¹ Methyl ist und worin R² Ethylen ist und R⁶ eine zweiwertige aliphatische, cycloaliphatische, aromatische oder araliphatische Kohlenwasserstoffgruppe mit bis zu 16 Kohlenstoffatomen ist;
a) 40 bis 85 % eines ersten Comonomeren ausgewählt aus Methylmethacrylat, Cyclohexylmethacrylat, Trimethylcyclohexylmethacrylat, Isobornylmethacrylat, Hexafluorisopropylmethacrylat, t-Butylmethacrylat, Styrol und t-Butylstyrol;
b) 0 bis 15 % eines zweiten Comonomeren ausgewählt aus Acrylsäure, Methacrylsäure und Maleinsäureanhydrid; und
c) 0 bis 20 % Ethylenglykoldimethacrylat oder Neopentylglykoldiacrylat.

19. Kontaktlinse, gebildet aus einem Homopolymeren einer Verbindung der Formel I, wie in Anspruch 8 offenbart.

20. Kontaktlinse, gebildet aus einem Copolymeren gemäß Anspruch 8.

21. Kontaktlinse, gebildet aus einem Copolymeren gemäß Anspruch 12.

22. Kontaktlinse, gebildet aus einem Copolymeren gemäß einem der Ansprüche 14, 15 oder 16.

23. Kontaktlinse, gebildet aus einem Copolymeren gemäß einem der Ansprüche 17 oder 18.

## Patentansprüche (Patentansprüche für folgende(n) Vertragsstaat(en): ES)

1. Verfahren zur Herstellung eines poly-ungesättigtes Polysiloxans der Formel I 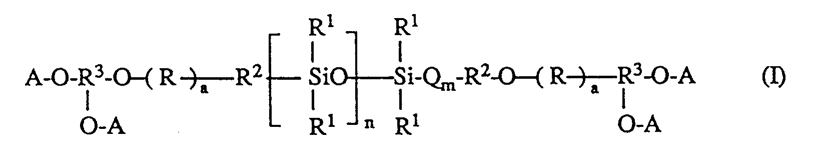 worin
a = 0 oder 1
n = 2 bis 500
m = 0 bis 2
worin a und m beide nicht gleichzeitig 0 sind;
worin wenigstens drei von A entweder aus einer reaktiven vinylhaltigen Gruppe der Formel Ia oder Ib besteht, und das verbleibende A Wasserstoff oder diese reaktive vinylhaltige Gruppe ist; 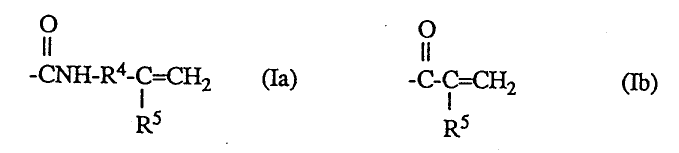 vorausgesetzt, daß wenigstens eines von A die Formel Ia hat im Falle, daß m = 0 ist und a = 1 ist; worin R⁴ Arylen mit 6 bis 12 Kohlenstoffatomen ist, Alkarylen mit 7 bis 14 Kohlenstoffatomen ist, Alkylen mit bis zu 8 Kohlenstoffatomen ist, Alkylenoxy mit bis zu 8 Kohlenstoffatomen ist oder eine Gruppe der Formel 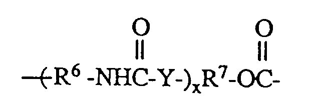 ist, wobei R⁷ Alkylen mit 2 bis 8 Kohlenstoffatomen ist, x = 0 oder 1 ist, Y -O- oder -NR⁸- ist, wobei R⁸ Wasserstoff oder Alkyl mit bis zu 4 Kohlenstoffatomen ist, und R⁶ der Diradikalrest eines aliphatischen, cycloaliphatischen, aromatischen oder araliphatischen Diisocyanats ist;
R⁵ ist Wasserstoff oder Methyl;
R¹ ist Alkyl mit bis zu 4 Kohlenstoffatomen oder Phenyl;
R² ist Alkylen mit 2 bis 6 Kohlenstoffatomen;
R³ ist 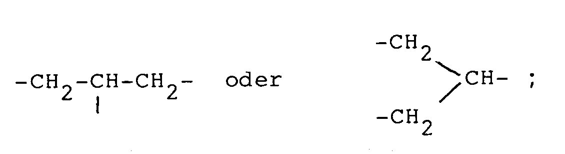 derart, daß
-R³(OA)₂ für AOCH₂CH(OA)CH₂- oder (AOCH₂)₂CH- steht;
Q ist eine Gruppe der Formel Ic, 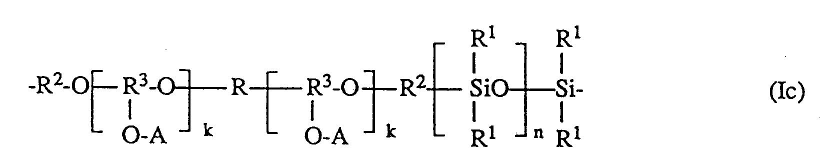 worin R¹, R², R³, A und n wie vorstehend definiert sind;
und k = 0 oder 1; und R ist eine Gruppe der Formel Id 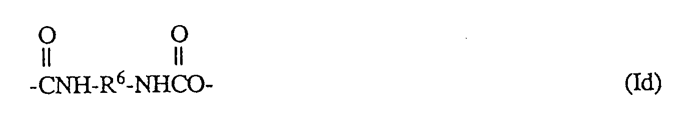 worin R⁶ wie oben definiert ist;
dadurch gekennzeichnet, daß ein Polysiloxan-polyol der Formel II 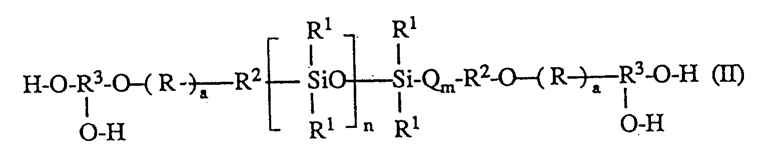 worin die Variablen wie oben definiert sind, mit einer isocyanato-substituierten Vinylverbindung der Formel III 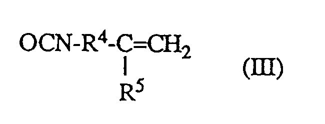 worin R⁴ und R⁵ wie oben definiert sind, oder mit einem entsprechenden Acrylsäure- oder Methacrylsäurederivat, welches die Gruppe der Formel Ib einführt, umgesetzt wird.

2. Verfahren gemäß Anspruch 1, worin R¹ Methyl ist.

3. Verfahren gemäß Anspruch 1, worin m = 1 oder 2 ist, k = 1 ist, a = 0 ist, A der Formel Ia entspricht, x = 0 ist, -R³(OA)₂ die Formel AOCH₂CH(OA)CH₂- aufweist, und R⁵ Methyl ist.

4. Verfahren gemäß Anspruch 3, worin R² Ethylen ist und R⁶ eine zweiwertige aliphatische, cycloaliphatische, aromatische oder araliphatische Kohlenwasserstoffgruppe mit bis zu 16 Kohlenstoffatomen ist.

5. Verfahren gemäß Anspruch 1, worin A der Formel Ib entspricht, a = 1 ist, m = 1 oder 2 ist, k = 0 ist, -R³(OA)₂ der Formel (AOCH₂)₂CH- entspricht, und R⁵ Methyl ist.

6. Verfahren gemäß Anspruch 5, worin R² Ethylen ist und R⁶ eine zweiwertige aliphatische, cycloaliphatische, aromatische oder araliphatische Kohlenwasserstoffgruppe mit bis zu 16 Kohlenstoffatomen ist.

7. Verfahren zur Herstellung eines Homopolymeren der Verbindung der Formel I gemäß Anspruch 1, dadurch gekennzeichnet, daß die Verbindung der Formel I in an sich bekannter Weise polymerisiert wird.

8. Verfahren zur Herstellung eines Copolymeren der Verbindung der Formel I 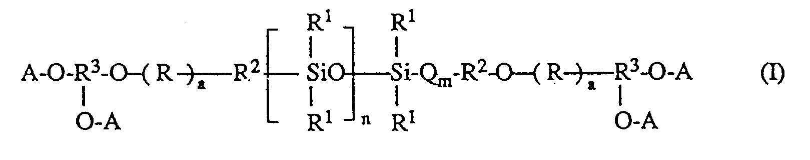 worin
a = 0 oder 1
n = 2 bis 500
m = 0 bis 2
worin wenigstens drei von A entweder aus einer reaktiven vinylhaltigen Gruppe der Formel Ia oder Ib besteht, und das verbleibende A Wasserstoff oder diese reaktive vinylhaltige Gruppe ist; 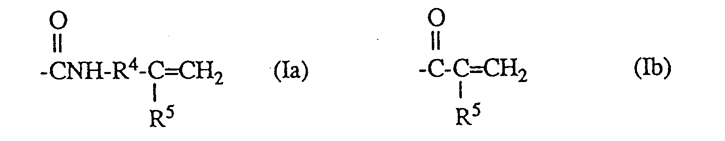 vorausgesetzt, daß wenigstens eines von A die Formel Ia hat im Falle, daß m = 0 ist und a = 1 ist; worin R⁴ Arylen mit 6 bis 12 Kohlenstoffatomen ist, Alkarylen mit 7 bis 14 Kohlenstoffatomen ist, Alkylen mit bis zu 8 Kohlenstoffatomen ist, Alkylenoxy mit bis zu 8 Kohlenstoffatomen ist oder eine eine Gruppe der Formel 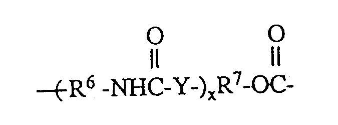 ist, wobei R⁷ Alkylen mit 2 bis 8 Kohlenstoffatomen ist, x = 0 oder 1 ist, Y -O- oder -NR⁸ - ist, wobei R⁸ Wasserstoff oder Alkyl mit bis zu 4 Kohlenstoffatomen ist, und R⁶ der Diradikalrest eines aliphatischen, cycloaliphatischen, aromatischen oder araliphatischen Diisocyanats ist;
R⁵ ist Wasserstoff oder Methyl;
R¹ ist Alkyl mit bis zu 4 Kohlenstoffatomen oder Phenyl;
R² ist Alkylen mit 2 bis 6 Kohlenstoffatomen;
R³ ist 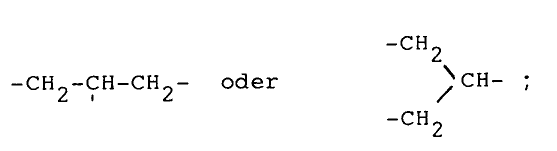 derart, daß
-R³(OA)₂ für AOCH₂CH(OA)CH₂- oder (AOCH₂)₂CH- steht;
Q ist eine Gruppe der Formel Ic, 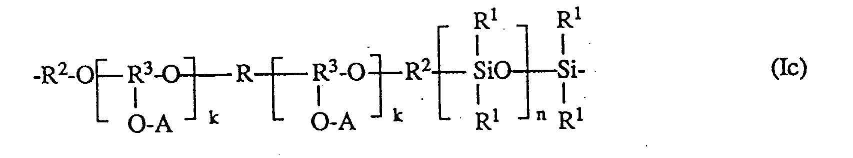 worin R¹, R², R³, A und n wie vorstehend definiert sind;
und k = 0 oder 1; und R ist eine Gruppe der Formel Id 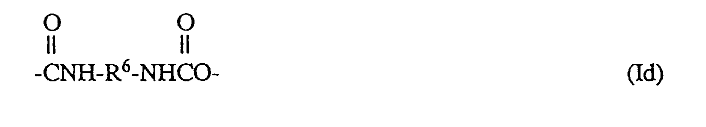 worin R⁶ wie oben definiert ist;
mit bis zu 95 Gew.-% von einem oder mehreren hydrophilen oder hydrophoben reaktiven Vinylmonomeren oder Mischungen davon, auf Basis des Gewichts des Polymeren, dadurch gekennzeichnet, daß die Verbindung der Formel I und das/die Vinylmonomere(n) in an sich bekannter Weise copolymerisiert wird/werden.

9. Verfahren zur Herstellung eines Copolymeren gemäß Anspruch 8, worin in der Verbindung der Formel I a, x und m = 0 sind, A der Formel Ia entspricht, R⁴ der Formel 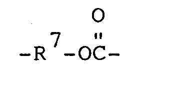 entspricht, worin R⁷ Alkylen mit 2 bis 6 Kohlenstoffatomen ist, R² Alkylen mit 2 bis 4 Kohlenstoffatomen ist, und jedes -R³(OA)₂ der Formel AOCH₂CH(OA)CH₂- entspricht.

10. Verfahren zur Herstellung eines Copolymeren gemäß Anspruch 9, worin in der Verbindung der Formel I R² Ethylen ist, jedes A der Formel Ia entspricht, und R⁵ Methyl ist.

11. Verfahren zur Herstellung eines Copolymeren gemäß Anspruch 9, worin in der Verbindung der Formel I R¹ Methyl ist.

12. Verfahren zur Herstellung eines Copolymeren gemäß Anspruch 8, mit 15 bis 60 Gew.-% des Makromeren der Formel I gemäß Anspruch 8 und 85 bis 40 Gew.-% eines reaktiven monoolefinischen oder diolefinischen, wasserlöslichen oder wasserunlöslichen Monomeren oder einer Mischung davon.

13. Verfahren zur Herstellung eines Copolymeren gemäß Anspruch 8, umfassend die vernetzende Copolymerisation von
(A) 15 bis 60 Gew.-% dieses Polymeren eines Polysiloxanmakromoneren der Formel I gemäß Anspruch 8 mit einem Molekulargewicht von 800 bis 10 000, und enthaltend vier endständige, polymerisierbare olefinische Gruppen, und
(B) 85 bis 40 Gew.-% dieses Polymeren der wasserlöslichen oder wasserunlöslichen Monomeren oder Mischungen davon, wobei diese Monomeren monoolefinisch, diolefinisch oder eine Mischung von monoolefinischen und diolefinischen Monomeren sind.

14. Verfahren zur Herstellung eines Copolymeren gemäß Anspruch 8 mit 15 bis 90 Gew.-% des Makromeren der Formel I gemäß Anspruch 8 und 85 bis 10 % eines Gemisches von reaktiven wasserunlöslichen monoolefinischen Monomeren, wobei dieses Gemisch 0 bis 15 % wasserlösliche monoolefinische Monomere und 0 bis 20 % diolefinisches Monomer umfaßt.

15. Verfahren zur Herstellung eines Copolymeren gemäß Anspruch 8 mit 30 bis 80 Gew.-% des Makromeren der Formel I gemäß Anspruch 8 und 70 bis 20 Gew.-% eines wasserunlöslichen monoolefinischen Monomeren oder Monomerengemisches, enthaltend bis zu 10 % wasserlösliches monoolefinisches Monomer.

16. Verfahren zur Herstellung eines Copolymeren gemäß Anspruch 8, mit 20 bis 60 Gew.-% des Makromeren der Formel I gemäß Anspruch 8 und 80 bis 40 Gew.-% in erster Linie wasserlöslicher Monomerer.

17. Verfahren zur Herstellung eines Copolymeren gemäß Anspruch 8, umfassend die vernetzende Copolymerisation von
(A) 15 bis 85 % des Polysiloxans gemäß Anspruch 11;
a) 15 bis 85 % eines ersten Comonomeren ausgewählt aus Methylmethacrylat, Cyclohexylmethacrylat, Trimethylcyclohexylmethacrylat, Isobornylmethacrylat, Hexafluorisopropylmethacrylat, t-Butylmethacrylat, Styrol und t-Butylstyrol;
b) 0 bis 15 % eines zweiten Comonomeren ausgewählt aus Acrylsäure, Methacrylsäure und Maleinsäureanhydrid; und
c) 0 bis 20 % Ethylenglykoldimethacrylat oder Neopentylglykoldiacrylat.

18. Verfahren zur Herstellung eines Copolymeren gemäß Anspruch 8, umfassend die vernetzende Copolymerisation von
(A) 15 bis 60 % des Polysiloxans gemäß Anspruch 8, worin R¹ Methyl ist und worin m = 1 oder 2 ist, k = 1 ist, a = 0 ist, A der Formel Ia entspricht, x = 0 ist, -R³(OA)₂ der Formel AOCH₂CH(OA)CH₂- entspricht, und R⁵ Methyl ist, oder worin R¹ Methyl ist und worin R² Ethylen ist und R⁶ eine zweiwertige aliphatische, cycloaliphatische, aromatische oder araliphatische Kohlenwasserstoffgruppe mit bis zu 16 Kohlenstoffatomen ist;
a) 40 bis 85 % eines ersten Comonomeren ausgewählt aus Methylmethacrylat, Cyclohexylmethacrylat, Trimethylcyclohexylmethacrylat, Isobornylmethacrylat, Hexafluorisopropylmethacrylat, t-Butylmethacrylat, Styrol und t-Butylstyrol;
b) 0 bis 15 % eines zweiten Comonomeren ausgewählt aus Acrylsäure, Methacrylsäure und Maleinsäureanhydrid; und
c) 0 bis 20 % Ethylenglykoldimethacrylat oder Neopentylglykoldiacrylat.

19. Kontaktlinse, gebildet aus einem Homopolymeren einer Verbindung der Formel I, wie in Anspruch 8 offenbart.

20. Kontaktlinse, gebildet aus einem Copolymeren gemäß Anspruch 8.

21. Kontaktlinse, gebildet aus einem Copolymeren gemäß Anspruch 12.

22. Kontaktlinse, gebildet aus einem Copolymeren gemäß einem der Ansprüche 14, 15 oder 16.

23. Kontaktlinse, gebildet aus einem Copolymeren gemäß einem der Ansprüche 17 oder 18.

## Revendications (Revendications pour l'(les) Etat(s) contractant(s) suivant(s): AT, BE, CH, DE, FR, GB, GR, IT, LI, LU, NL, SE)

1. Polysiloxane polyinsaturé de formule I 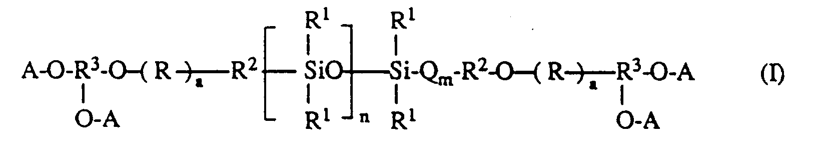 dans laquelle a est zéro ou un ;
n est 2 à 500 ;
m est zéro à deux ;
et a et m ne sont pas tous deux zéro en même temps ;
au moins trois de A consistent en un groupe contenant un vinyle réactif de formule Ia ou Ib et les A restants sont un hydrogène ou un desdits groupes contenant un vinyle réactif, 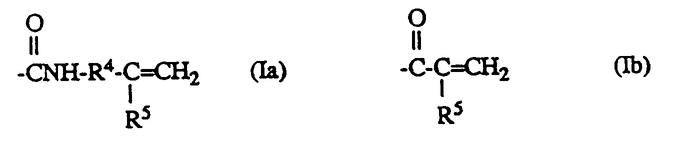 sous réserve qu'au moins un de A réponde à la formule Ia dans le cas où m est zéro et a est un,
où R⁴ est un arylène de 6 à 12 atomes de carbone, un alkarylène de 7 à 14 atomes de carbone, un alkylène ayant jusqu'à 8 atomes de carbone, un alkylénoxy ayant jusqu'à 8 atomes de carbone ou un groupe de formule 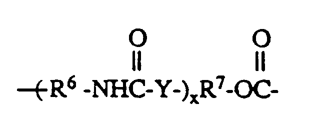 où R⁷ est un alkylène de 2 à 8 atomes de carbone, x est zéro ou un, Y est -O- ou -NR⁸-, où R⁸ est un hydrogène ou un alkyle ayant jusqu'à 4 atomes de carbone, et R⁶ est un reste diradical d'un diisocyanate aliphatique, cycloaliphatique, aromatique ou araliphatique ;
R⁵ est un hydrogène ou un méthyle ;
R¹ est un alkyle ayant jusqu'à 4 atomes de carbone ou un phényle ;
R² est un alkylène de 2 à 6 atomes de carbone ;
R³ est 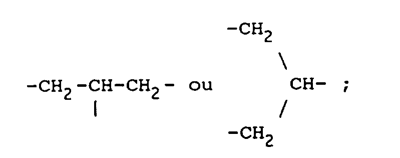 tel que -R³(OA)₂ soit
AOCH₂CH(OA)CH₂- ou (AOCH₂)₂CH- ;
Q est un groupe de formule Ic, 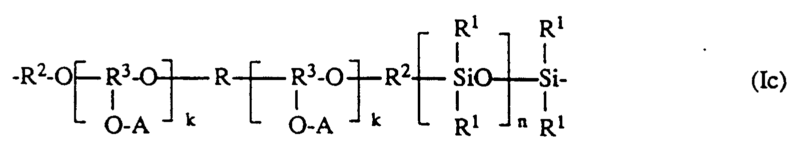 où R¹, R², R³, A et n sont définis comme ci-dessus ; et k est zéro ou un ;
et R est un groupe de formule Id 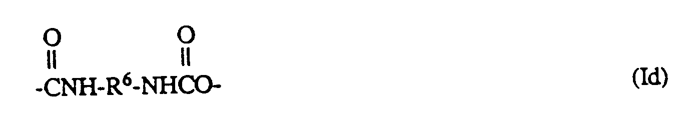 où R⁶ est défini comme ci-dessus.

2. Polysiloxane selon la revendication 1, où R¹ est un méthyle.

3. Polysiloxane selon la revendication 1, où m est 1 ou 2, k est 1, a est zéro, A répond à la formule Ia, x est zéro, -R³(OA)₂ répond à la formule AOCH₂CH(OA)CH₂- et R⁵ est un méthyle.

4. Polysiloxane selon la revendication 3, où R² est un éthylène et R⁶ est un groupe hydrocarbyle divalent aliphatique, cycloaliphatique, aromatique ou araliphatique ayant jusqu'à 16 atomes de carbone.

5. Polysiloxane selon la revendication 1, où A répond à la formule Ib, a est 1, m est 1 ou 2, k est zéro, -R³(OA)₂ répond à la formule (AOCH₂)₂CH- et R⁵ est un méthyle.

6. Polysiloxane selon la revendication 5, où R² est un éthylène et R⁶ est un groupe hydrocarbyle divalent aliphatique, cycloaliphatique, aromatique ou araliphatique ayant jusqu'à 16 atomes de carbone.

7. Homopolymère du composé de formule I selon la revendication 1.

8. Copolymère du composé de formule I 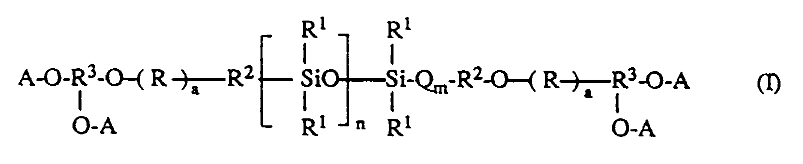 dans laquelle a est zéro ou un ;
n est 2 à 500 ;
m est zéro à deux ;
au moins trois de A consistent en un groupe contenant un vinyle réactif de formule Ia ou Ib et les A restants sont un hydrogène ou ledit groupe contenant un vinyle réactif, 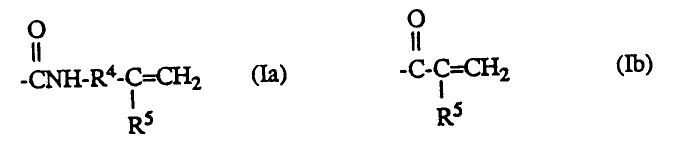 sous réserve qu'au moins un de A réponde à la formule Ia dans le cas où m est zéro et a est un,
où R⁴ est un arylène de 6 à 12 atomes de carbone, un alkarylène de 7 à 14 atomes de carbone, un alkylène ayant jusqu'à 8 atomes de carbone, un alkylénoxy ayant jusqu'à 8 atomes de carbone ou un groupe de formule 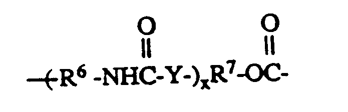 où R⁷ est un alkylène de 2 à 8 atomes de carbone, x est zéro ou un, Y est -O- ou -NR⁸-, où R⁸ est un hydrogène ou un alkyle ayant jusqu'à 4 atomes de carbone, et R⁶ est un reste diradical d'un diisocyanate aliphatique, cycloaliphatique, aromatique ou araliphatique ;
R⁵ est un hydrogène ou un méthyle ;
R¹ est un alkyle ayant jusqu'à 4 atomes de carbone ou un phényle ;
R² est un alkylène de 2 à 6 atomes de carbone ;
R³ est 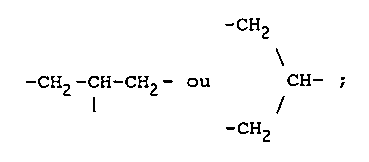 tel que -R³(OA)₂ soit
AOCH₂CH(OA)CH₂- ou (AOCH₂)₂CH- ;
Q est un groupe de formule Ic, 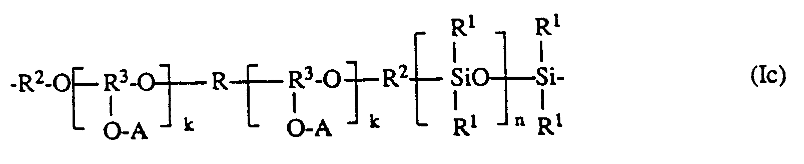 où R¹, R², R³, A et n sont définis comme ci-dessus ; et k est zéro ou un ;
et R est un groupe de formule Id 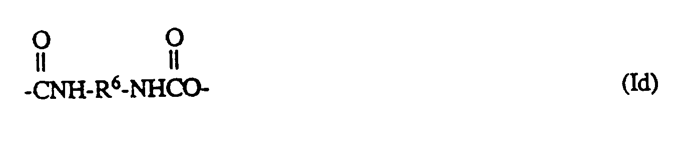 où R⁶ est défini comme ci-dessus ;
avec jusqu'à 95 % en poids d'un ou plusieurs monomères vinyliques réactifs hydrophiles ou hydrophobes ou leurs mélanges, relativement au poids du polymère.

9. Copolymère selon la revendication 8, où, dans le composé de formule I, a, x et m sont zéro, A répond à la formule Ia, R⁴ répond à la formule 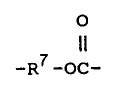 où R⁷ est un alkylène de 2 à 6 atomes de carbone, R² est un alkylène de 2 à 4 atomes de carbone et chaque -R³(OA)₂ répond à la formule AOCH₂CH(OA)CH₂-.

10. copolymère selon la revendication 9, où, dans le composé de formule I, R² est un éthylène, chaque A répond à la formule Ia et R⁵ est un méthyle.

11. Copolymère selon la revendication 9, où, dans le composé de formule I, R¹ est un méthyle.

12. Copolymère selon la revendication 8, avec 15 à 60 % en poids du macromère de formule I selon la revendication 8 et 85 à 40 % en poids d'un monomère réactif monooléfinique ou dioléfinique, soluble dans l'eau ou insoluble dans l'eau ou un mélange correspondant.

13. Copolymère selon la revendication 8, qui comprend le produit réticulé de la copolymérisation de
(A) 15 à 60 % en poids dudit polymère d'un polysiloxane macromère de formule I selon la revendication 8 ayant un poids moléculaire de 800 à 10 000 et contenant quatre groupes oléfiniques terminaux polymérisables et
(B) 85 à 40 % en poids, relativement audit polymère, de monomères solubles dans l'eau ou insolubles dans l'eau ou de leurs mélanges, lesdits monomères étant monooléfiniques, dioléfiniques ou faits d'un mélange de monomères monooléfiniques et dioléfiniques.

14. Copolymère selon la revendication 8, avec 15 à 90 % en poids du macromère de formule I selon la revendication 8 et 85 à 10 % d'un mélange de monomères monooléfiniques réactifs insolubles dans l'eau, ledit mélange comprenant 0 à 15 % de monomères monooléfiniques solubles dans l'eau et 0 à 20 % de monomère dioléfinique.

15. Copolymère selon la revendication 8, avec 30 à 80 % en poids du macromère de formule I selon la revendication 8 et 70 à 20 % en poids d'un monomère monooléfinique insoluble dans l'eau ou d'un mélange de monomères contenant jusqu'à 10 % de monomère monooléfinique soluble dans l'eau.

16. Copolymère selon la revendication 8, avec 20 à 60 % en poids du macromère de formule I selon la revendication 8 et 80 à 40 % en poids de monomères essentiellement solubles dans l'eau.

17. Copolymère selon la revendication 8 comprenant le produit réticulé de la copolymérisation de
(A) 15 à 85 % du polysiloxane de la revendication 11 ;
(a) 15 à 85 % d'un premier comonomère choisi parmi le méthacrylate de méthyle, le méthacrylate de cyclohexyle, le méthacrylate de triméthylcyclohexyle, le méthacrylate d'isobornyle, le méthacrylate d'hexafluoro-isopropyle, le méthacrylate de tert-butyle, le styrène et le tert-butylstyrène ;
(b) 0 à 15 % d'un second comonomère choisi parmi l'acide acrylique, l'acide méthacrylique et l'anhydride maléique ; et
c) 0 à 20 % de diméthacrylate d'éthylèneglycol ou de diacrylate de néopentylglycol.

18. Copolymère selon la revendication 8 comprenant le produit réticulé de la copolymérisation de
(A) 15 à 60 % du polysiloxane de la revendication 8 où R¹ est un méthyle et où m est 1 ou 2, k est 1, a est zéro, A répond à la formule Ia, x est zéro, -R³(OA)₂ répond à la formule AOCH₂CH(OA)CH₂-et R⁵ est un méthyle, ou R¹ est un méthyle et R² est un éthylène et R⁶ est un groupe hydrocarbyle divalent aliphatique, cycloaliphatique, aromatique ou araliphatique ayant jusqu'à 16 atomes de carbone ;
(a) 40 à 85 % d'un premier comonomère choisi parmi le méthacrylate de méthyle, le méthacrylate de cyclohexyle, le méthacrylate de triméthylcyclohexyle, le méthacrylate d'isobornyle, le méthacrylate d'hexafluoro-isopropyle, le méthacrylate de tert-butyle, le styrène et le tert-butylstyrène ;
(b) 0 à 15 % d'un second comonomère choisi parmi l'acide acrylique, l'acide méthacrylique et l'anhydride maléique ; et
c) 0 à 20 % de diméthacrylate d'éthylèneglycol ou de diacrylate de néopentylglycol.

19. Lentille de contact formée d'un homopolymère d'un composé de formule I selon la revendication 8.

20. Lentille de contact formée d'un copolymère selon la revendication 8.

21. Lentille de contact formée d'un copolymère selon la revendication 12.

22. Lentille de contact formée d'un copolymère selon l'une quelconque des revendications 14, 15 ou 16.

23. Lentille de contact formée d'un copolymère selon l'une des revendications 17 ou 18.

## Revendications (Revendications pour l'(les) Etat(s) contractant(s) suivant(s): ES)

1. Procédé pour la préparation d'un polysiloxane polyinsaturé de formule I 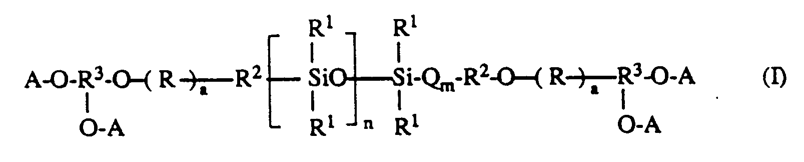 dans laquelle a est zéro ou un ;
n est 2 à 500 ;
m est zéro à deux ;
et a et m ne sont pas tous deux zéro en même temps ;
au moins trois de A consistent en un groupe contenant un vinyle réactif de formule Ia ou Ib et les A restants sont un hydrogène ou un desdits groupes contenant un vinyle réactif, 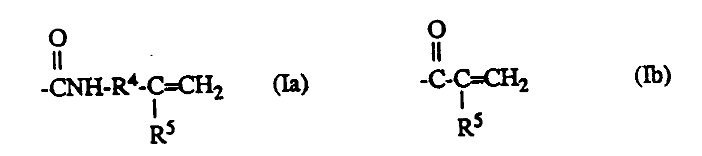 sous réserve qu'au moins un de A réponde à la formule Ia dans le cas où m est zéro et a est un,
où R⁴ est un arylène de 6 à 12 atomes de carbone, un alkarylène de 7 à 14 atomes de carbone, un alkylène ayant jusqu'à 8 atomes de carbone, un alkylénoxy ayant jusqu'à 8 atomes de carbone ou un groupe de formule 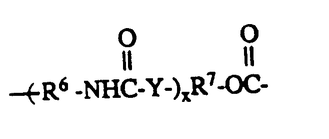 où R⁷ est un alkylène de 2 à 8 atomes de carbone, x est zéro ou un, Y est -O- ou -NR⁸-, où R⁸ est un hydrogène ou un alkyle ayant jusqu'à 4 atomes de carbone, et R⁶ est un reste diradical d'un diisocyanate aliphatique, cycloaliphatique, aromatique ou araliphatique ;
R⁵ est un hydrogène ou un méthyle ;
R¹ est un alkyle ayant jusqu'à 4 atomes de carbone ou un phényle ;
R² est un alkylène de 2 à 6 atomes de carbone ;
R³ est 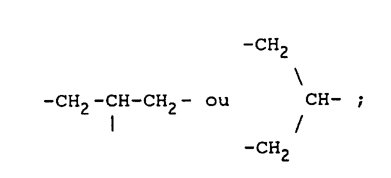 tel que -R³(OA)₂ soit
AOCH₂CH(OA)CH₂- ou (AOCH₂)₂CH- ;
Q est un groupe de formule Ic, 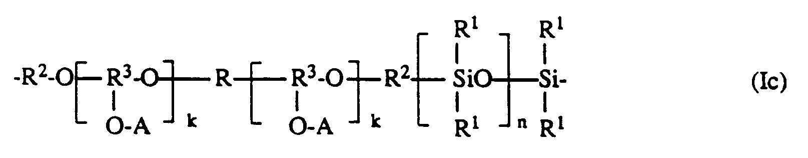 où R¹, R², R³, A et n sont définis comme ci-dessus ; et k est zéro ou un ;
et R est un groupe de formule Id 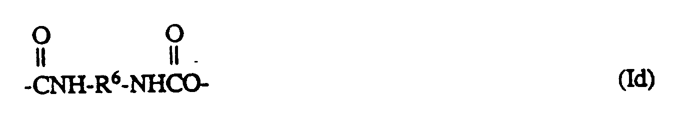 où R⁶ est défini comme ci-dessus ;
caractérisé en ce que l'on fait réagir un polysiloxane-polyol de formule II 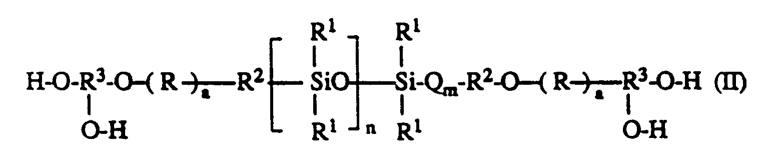 où les variables sont définies comme ci-dessus, avec un composé vinylique isocyanato-substitué de formule III 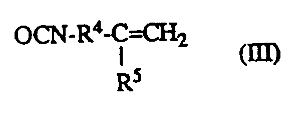 où R⁴ et R⁵ sont définis comme ci-dessus, ou avec un acide acrylique ou méthacylique correspondant introduisant le groupe de formule Ib.

2. Procédé selon la revendication 1, où R¹ est un méthyle.

3. Procédé selon la revendication 1, où m est 1 ou 2, k est 1, a est zéro, A répond à la formule Ia, x est zéro, -R³(OA)₂ répond à la formule AOCH₂CH(OA)CH₂- et R⁵ est un méthyle.

4. Procédé selon la revendication 3, où R² est un éthylène et R⁶ est un groupe hydrocarbyle divalent aliphatique, cycloaliphatique, aromatique ou araliphatique ayant jusqu'à 16 atomes de carbone.

5. Procédé selon la revendication 1, où A répond à la formule Ib, a est 1, m est 1 ou 2, k est zéro, -R³(OA)₂ répond à la formule (AOCH₂)₂CH- et R⁵ est un méthyle.

6. Procédé selon la revendication 5, où R² est un éthylène et R⁶ est un groupe hydrocarbyle divalent aliphatique, cycloaliphatique, aromatique ou araliphatique ayant jusqu'à 16 atomes de carbone.

7. Procédé pour la préparation d'un homopolymère du composé de formule I selon la revendication 1, caractérisé en ce que l'on polymérise de façon connue en soi le composé de formule I.

8. Procédé pour la préparation d'un copolymère du composé de formule I 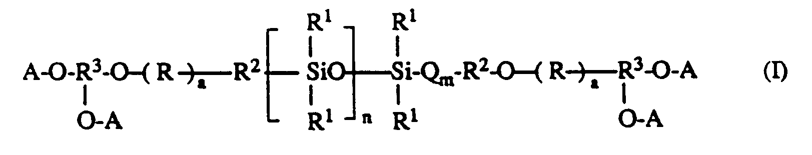 dans laquelle a est zéro ou un ;
n est 2 à 500 ;
m est zéro à deux ;
au moins trois de A consistent en un groupe contenant un vinyle réactif de formule Ia ou Ib et les A restants sont un hydrogène ou ledit groupe contenant un vinyle réactif, 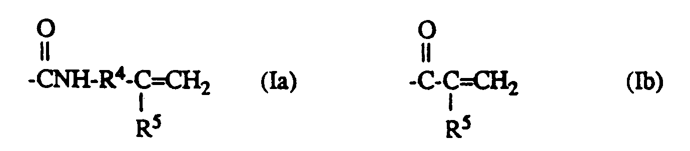 sous réserve qu'au moins un de A réponde à la formule Ia dans le cas où m est zéro et a est un,
où R⁴ est un arylène de 6 à 12 atomes de carbone, un alkarylène de 7 à 14 atomes de carbone, un alkylène ayant jusqu'à 8 atomes de carbone, un alkylénoxy ayant jusqu'à 8 atomes de carbone ou un groupe de formule 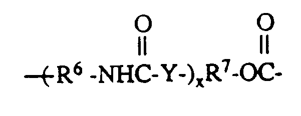 où R⁷ est un alkylène de 2 à 8 atomes de carbone, x est zéro ou un, Y est -O- ou -NR⁸-, où R⁸ est un hydrogène ou un alkyle ayant jusqu'à 4 atomes de carbone, et R⁶ est un reste diradical d'un diisocyanate aliphatique, cycloaliphatique, aromatique ou araliphatique ;
R⁵ est un hydrogène ou un méthyle ;
R¹ est un alkyle ayant jusqu'à 4 atomes de carbone ou un phényle ;
R² est un alkylène de 2 à 6 atomes de carbone ;
R³ est 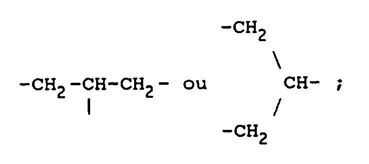 tel que -R³(OA)₂ soit
AOCH₂CH(OA)CH₂- ou (AOCH₂)₂CH- ;
Q est un groupe de formule Ic, 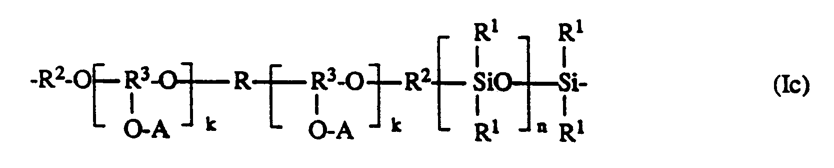 où R¹, R², R³, A et n sont définis comme ci-dessus ; et k est zéro ou un ;
et R est un groupe de formule Id 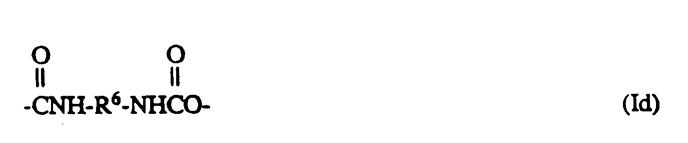 où R⁶ est défini comme ci-dessus ;
avec jusqu'à 95 % en poids d'un ou plusieurs monomères vinyliques réactifs hydrophiles ou hydrophobes ou leurs mélanges, relativement au poids du polymère, caractérisé en ce que l'on copolymérise de façon connue en soi le composé de formule I et le (ou les) monomère(s) vinylique(s).

9. Procédé pour la préparation d'un copolymère selon la revendication 8, où, dans le composé de formule I, a, x et m sont zéro, A répond à la formule Ia, R⁴ répond à la formule 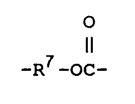 où R⁷ est un alkylène de 2 à 6 atomes de carbone, R² est un alkylène de 2 à 4 atomes de carbone et chaque -R³(OA)₂ répond à la formule AOCH₂CH(OA)CH₂-.

10. Procédé pour la préparation d'un copolymère selon la revendication 9, où, dans le composé de formule I, R² est un éthylène, chaque A répond à la formule Ia et R⁵ est un méthyle.

11. Procédé pour la préparation d'un copolymère selon la revendication 9, où, dans le composé de formule I, R¹ est un méthyle.

12. Procédé pour la préparation d'un copolymère selon la revendication 8, avec 15 à 60 % en poids du macromère de formule I selon la revendication 8 et 85 à 40 % en poids d'un monomère réactif monooléfinique ou dioléfinique, soluble dans l'eau ou insoluble dans l'eau, ou un mélange correspondant.

13. Procédé pour la préparation d'un copolymère selon la revendication 8, qui comprend la copolymérisation avec réticulation de
(A) 15 à 60 % en poids dudit polymère d'un polysiloxane macromère de formule I selon la revendication 8 ayant un poids moléculaire de 800 à 10 000 et contenant quatre groupes oléfiniques terminaux polymérisables et
(B) 85 à 40 % en poids, relativement audit polymère, de monomères solubles dans l'eau ou insolubles dans l'eau ou de leurs mélanges, lesdits monomères étant monooléfiniques, dioléfiniques ou faits d'un mélange de monomères monooléfiniques et dioléfiniques.

14. Procédé pour la préparation d'un copolymère selon la revendication 8, avec 15 à 90 % en poids du macromère de formule I selon la revendication 8 et 85 à 10 % d'un mélange de monomères monooléfiniques réactifs insolubles dans l'eau, ledit mélange comprenant 0 à 15 % de monomères monooléfiniques solubles dans l'eau et 0 à 20 % de monomère dioléfinique.

15. Procédé pour la préparation d'un copolymère selon la revendication 8, avec 30 à 80 % en poids du macromère de formule I selon la revendication 8 et 70 à 20 % en poids d'un monomère monooléfinique insoluble dans l'eau ou d'un mélange de monomères contenant jusqu'à 10 % de monomère monooléfinique soluble dans l'eau.

16. Procédé pour la préparation d'un copolymère selon la revendication 8, avec 20 à 60 % en poids du macromère de formule I selon la revendication 8 et 80 à 40 % en poids de monomères essentiellement solubles dans l'eau.

17. Procédé pour la préparation d'un copolymère selon la revendication 8 comprenant la copolymérisation avec réticulation de
(A) 15 à 85 % du polysiloxane de la revendication 11 ;
(a) 15 à 85 % d'un premier comonomère choisi parmi le méthacrylate de méthyle, le méthacrylate de cyclohexyle, le méthacrylate de triméthylcyclohexyle, le méthacrylate d'isobornyle, le méthacrylate d'hexafluoro-isopropyle, le méthacrylate de tert-butyle, le styrène et le tert-butylstyrène ;
(b) 0 à 15 % d'un second comonomère choisi parmi l'acide acrylique, l'acide méthacrylique et l'anhydride maléique ; et
c) 0 à 20 % de diméthacrylate d'éthylèneglycol ou de diacrylate de néopentylglycol.

18. Procédé pour la préparation d'un copolymère selon la revendication 8 comprenant la copolymérisation avec réticulation de
(A) 15 à 60 % du polysiloxane de la revendication 8 où R¹ est un méthyle et où m est 1 ou 2, k est 1, a est zéro, A répond à la formule Ia, x est zéro, -R³(OA)₂ répond à la formule AOCH₂CH(OA)CH₂-et R⁵ est un méthyle, ou R¹ est un méthyle et R² est un éthylène et R⁶ est un groupe hydrocarbyle divalent aliphatique, cycloaliphatique, aromatique ou araliphatique ayant jusqu'à 16 atomes de carbone ;
(a) 40 à 85 % d'un premier comonomère choisi parmi le méthacrylate de méthyle, le méthacrylate de cyclohexyle, le méthacrylate de triméthylcyclohexyle, le méthacrylate d'isobornyle, le méthacrylate d'hexafluoro-isopropyle, le méthacrylate de tert-butyle, le styrène et le tert-butylstyrène ;
(b) 0 à 15 % d'un second comonomère choisi parmi l'acide acrylique, l'acide méthacrylique et l'anhydride maléique ; et
c) 0 à 20 % de diméthacrylate d'éthylèneglycol ou de diacrylate de néopentylglycol.

19. Lentille de contact formée d'un homopolymère d'un composé de formule I selon la revendication 8.

20. Lentille de contact formée d'un copolymère selon la revendication 8.

21. Lentille de contact formée d'un copolymère selon la revendication 12.

22. Lentille de contact formée d'un copolymère selon l'une quelconque des revendications 14, 15 ou 16.

23. Lentille de contact formée d'un copolymère selon l'une des revendications 17 ou 18.
